(19) Europäisches Patentamt / European Patent Office / Office européen des brevets

(11) **EP 2 958 133 A1**

(12) **EUROPEAN PATENT APPLICATION**
published in accordance with Art. 153(4) EPC

(43) Date of publication:
**23.12.2015 Bulletin 2015/52**

(51) Int Cl.:
***H01J 49/40*** *(2006.01)*     ***G01N 30/72*** *(2006.01)*

(21) Application number: **13875207.6**

(22) Date of filing: **13.03.2013**

(86) International application number:
**PCT/KZ2013/000004**

(87) International publication number:
**WO 2014/126449 (21.08.2014 Gazette 2014/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.02.2013 KZ 20130243**

(71) Applicant: **Saparqaliyev, Aldan Asanovich Almaty 050058 (KZ)**

(72) Inventor: **Saparqaliyev, Aldan Asanovich Almaty 050058 (KZ)**

(74) Representative: **Jeck, Anton Klingengasse 2 71665 Vaihingen/Enz (DE)**

(54) **MASS SPECTROMETRY METHOD AND DEVICES**

(57) This invention relates to the analytical electronics used to identify compositions and structures of substances, in particular, to the analyzers comprising at least one mass-spectrometer (MS) and may be applied in such fields as medicine, biology, gas and oil industry, metallurgy, energy, geochemistry, hydrology, ecology.

Technical result provides the increase in MS resolution capacity, gain in sensitivity, precision and measurement rates of substances compositions and structures concurrently with enhancement of analyzer functional capabilities, downsizing and mass reduction.

A multipath method of mass-spectrometry and a three-dimensional reflecting (-reflecting) method of mass-spectrometry requiring to use a three-dimensional reflecting IO sub-system (- reflector) are developed. A new type of electric field distribution such as transversely discontinuous conic field distribution, including its type of three-dimensional distribution in area of reflection, is proposed to implementing said methods.

Versions of devices to implement the claimed method are developed.

Proposed schematic ion optical diagrams allow to developing different MS types.

Fig. 56

**Description**

This invention may be applied in fields such as medicine, biology, gas and oil industry, metallurgy, energy, geochemistry, hydrology, ecology, food industry, narcotics control and dope test.

New notions and terms entered into materials of this invention are mainly related to new objects proposed for the first time ever in this invention and they are explained in definitions of claims, explanatory notes to drawings and invention description. Several of them require supplemental explanations for their single-valued interpretation which are offered herein.

A P-element is referred to as an IO unit performed providing generation of two-dimensional surface formed by parallel displacement of straight line generator which is here referred to as a mean geometric surface or a median M-surface of the IO unit. In a general case, the P-element may be configured by a non-planar two-dimensional mean surface. Particular cases of the P-elements are their modes where they possess at one time with geometric mean planes which are commonly referred to as horizontal planes and integrated with them planes of electric field symmetry which commonly are referred to as mean planes of the 10 unit.

P-elements are divided into Cartesian-two-dimensional and three-dimensional P-elements. All P-elements are attributed to the three-dimensional P-elements with exception of Cartesian-two-dimensional types having uniform or non-uniform heights depending only on two coordinate axes in Cartesian coordinates.

Cartesian-two-dimensional P-elements are divided into planar-two-dimensional (with geometric mean planes) and surface-two-dimensional P-elements (M-surface is formed by parallel displacement of the straight-line generator along a bending line, a zigzag line or a bending-zigzag line).

A local IO unit is referred to as an 10 unit performed providing interactions with ion flux only in one area of the IO unit.

An extended IO unit is referred to as an IO unit extended in one of directions and designed for simultaneous or successive interactions with a single-path or with a multipath ion flux at different segments along the length of the extended IO unit.

Extensions of M-surfaces off-field of the P-element at its input and output are referred to as input and output mean planes of the R-unit, respectively.

An IO means is referred to as any IO unit or electrode-connected IO block (having at least some set of electrodes common for two or more elements) formed by two or more IO units.

An IO means of reflection is referred to as any of angled reflection IO unit of $\nu$-type, arched reflection IO unit of $\bar{\omega}$-type and loop-shaped reflection IO unit of $\rho$-type of double reflection block.

Main axis of the IO unit is referred to as an axis of the 10 unit along which privileged direction of charged particles flux is at average provided.

Path axis of the 10 means is referred to as an axis along which path ion flux may flow before entering (input path axis) or after leaving (output path axis) the 10 means.

Axis of coupling is referred to as an axis formed through two path axes alignment of two conjugated IO units (ion flux passes from one section to the other).

Unitary vector of path axis direction in the IO means is referred to as a unitary vector of given direction, as an example, along which path ion flux may flow before entering (unitary vector of input path axis) or after leaving (unitary vector of output path axis) the IO means.

Unitary vector of path axis direction of two IO means is referred to as a unitary vector of given direction, as an example, of direction along which path ion flux may flow after leaving one IO means before entering one other IO means.

Averaged front vector of the IO element of reflection is referred to as a unitary vector of front direction of the IO element of reflection controlling averaged direction of front vectors at entrance in and exit from the IO element of reflection located on a geometric center of front vectors at entrance in and exit from the IO element of reflection. Averaged front vector of the IO element of reflection is a single notion determining a general space orientation of input and output of the 10 element of reflection, its single-zone and multi-zone types inclusive.

Vertical on-stream and horizontal on-stream IO means (IO element or IO unit) of the IO sub-system is referred to as an IO means performed in the IO sub-system with option to pass an averaged trajectory of path ion flux along and in proximity of longitudinal-vertical plane and horizontal plane of the IO means, respectively.

Base plane or $\bar{\lambda}$-plane of the IO system/sub-system is referred to as a plane which is parallel to an averaged mean plane or averaged longitudinal-vertical plane depending on which mentioned planes the IO means are more regularly arranged in the IO sub-system. Extended axes of extended IO means of reflection in a reflecting IO sub-system are arranged perpendicularly to the base plane of the reflecting IO sub-system. Local IO means of reflection are arranged in one plane and base plane is parallel to this plane in a planar-reflecting IO sub-system. Increments axis or $\hbar$-axis of the IO system/sub-system is referred to as an axis perpendicular to its base plane.

Increments plane or $\hbar$-plane of the IO system /sub-system is referred to as a plane perpendicular to its base plane and passing through longitudinal geometric center of the IO system/sub-system, while in a particular case it is a longitudinal-vertical plane of the IO system/sub-system.

Two IO means are referred to as conjugated means provided that ion flux after leaving one IO means gets into one other.

A single-syllable reflecting IO sub-system is referred to as an IO sub-system comprising at its vertexes the IO means of reflection selected among the extended and local means of reflection and performed with option of single reflection at each one IO means of reflection.

A multi-syllable reflecting IO sub-system is referred to as an IO sub-system comprising at its vertexes extended means of reflection and performed with option of two and more reflections at different areas of each every IO means of reflection.

Two IO means are referred to as electrode-connected providing that at least one segment of electrode is common for these two IO means.

Two IO means are referred to as electrically connected IO means providing that at least one adjacent segment of electrodes in these two IO means is under the same electrical potential.

Projection nodal point of *HR2PLR*-blocks or two-loop single-syllable or multi-syllable four-vertex *PLR*-sub-system is referred to as a point of their path axes intersection in projection on the base plane. Path axes in projection on the base plane define $\lambda$-characteristic line for each above mentioned *HR2PLR*-block or two-loop single-syllable or multi-syllable four-vertex *PLR*-sub-system.

Transverse nodal plane of the *HR2PLR*-block or of two-loop single-syllable or multi-syllable four-vertex *PLR*-sub-system is referred to as a plane perpendicular to the base plane and vertical-longitudinal plane passing through nodal points.

A channel-single-path IO system/sub-system is referred to as an IO system/sub-system forming a simply connected region of space for ion flux passage and performed with option to passing a single-path ion flux.

A channel-multi-path IO system/sub-system is referred to as an IO system/sub-system forming a simply connected region of space for ion flux passage and performed with option to passing, at least, a double-path ion flux.

In multi-element IO sub-system, such as in a reflecting IO sub-system, any IO elements of reflection constituting any one of them and designed to receive any external ion flux entered from the outside of the IO sub-system and to remove-out the ion flux from the IO sub-system, respectively, are referred to as a first (or input) IO element and a last (or output) IO element of the IO sub-system. All other IO elements of the IO sub-system are referred generally to as mean elements or each reflecting IO element are identified by numbering as the ion flux moves along, for example, in a four-vertex *PLR*-sub-system (two-loop-wise reflecting IO sub-system) with four IO elements of reflection, while a second IO element is referred to as an reflecting IO element arranged on one diagonal segment of characteristic line with an input IO element of reflection, while a third element is referred to as an reflecting IO element arranged on one diagonal segment of characteristic line with an output IO element of reflection.

In two IO means of reflection conjugated in a reflecting IO sub-system an angle between vectors read counterclockwise from an unitary vector $\vec{n}_{(12)}$ of conjugating axis of the IO means of reflection directed towards to an unitary averaged frontal vector $\vec{n}_1$ of the said first IO means of reflection is designated by symbol $\beta_{(12)1}$, while an angle between vectors read counterclockwise from an unitary vector $\vec{n}_{(12)}$ directed towards to an unitary averaged frontal vector $\vec{n}_2$ of the said second IO means of reflection is designated by symbol $\beta_{(12)2}$.

In general optional methods of mass-spectrometry and mass-spectrometers (MS) are known. In general a method of mass-spectrometry provides the following:

(i) Ionize the substance sample in an ionic source unit and remove the ion flux out it, form the ion flux and control its motion including its mass dispersion by ions masses (mass dispersion by values of their mass/charge ratios, m/z) with, at least, one of magnetic and electric fields generated by groups of ion-conducting blocks composed of ion-conducting IB-channels with boundary surfaces and IO channel subsystem, which each is a part of a MS-channel with an IO system (series-connected ion-conducting IB-channels and ionic source IB-channel of ionic source unit), wherein said channel IO system, at least, of one ion-conducting IB-channel is performed being selected among the series comprising such its types as linear, curvilinear in mode of cross-space mass dispersing and in reflecting mode;

(ii) Register ions, at least, by means of one sensor of detector system;

(iii) Control and manage the operations of all blocks of the mass-spectrometer as well as support the data processing by means of controller-computer system.

In general a mass-spectrometer (MS) to perform mass-spectrometry processes consists of the following:

(i) MS-blocks: an ionic source unit; group of ion-conducting blocks, integrated in a block-structured docking group and analyzer-disperser block provided that the said blocks include IB-channels with boundary surfaces and IO channel subsystem wherein:

- IB-channel relevant to its block is a part of a MS-channel which integrates ion-conducting IB-channels of ion-conducting blocks together with an ionic source IB-channel of the ionic source unit;
- Channel 10 subsystem relevant to its IB-channel is a part of the IO system of MS-channel which integrates the 10 systems of ion-conducting channels together with IO system of the ionic source IB-channel;
- Ion-conducting IB-channels contain, at least, two boundary surfaces selected among the series comprising such their types as a conventional surface, a surface coinciding with a boundary electrode of the channel IO subsystem, which each is provided, at least, with one gate port for passing the said channel ion flux according to the selected boundary surface;
- IO subsystem, at least, of one ion-conducting IB-channel performed being selected among the series comprising such its types as linear, curvilinear in mode of cross-space mass dispersing and reflecting IO sub-system;

(ii) Detector system;
(iii) Controller-computer system.

There are multiple alternatives to form a MS block-structured docking group depending on specified tasks to be solved by proposed MS means. According to quantitative composition of blocks in a block-structured docking group, the MSs may be ranged to different types of MS modularity levels: extended multi-modular and multi-modular MS; MS of mean modularity level, medium modular MS and small-section modular MS.

Small-section modular MSs are designed to be operated in a single-stage mass-spectrometry. At that a block-structured docking group of the MS is composed of minimum structural elements: a pre-shaping block and distributing accelerator blocks. Block-structured docking group of the MS of mean modularity level is composed of a pre-shaping block, a distributing accelerator block and a block of refinement cell or ions trapping block. Block-structured docking group of a multi-modular MS is composed of a pre-shaping block, a distributing accelerator block, a block of refinement cell and ions trapping block. Block-structured docking group of an extended-multi-modular MS is composed of a pre-shaping block, a distributing accelerator block, a block of refinement cell, ions trapping block and a block of further ions accumulation. The MS of mean modularity level with block of refinement cell, multi-modular MS and extended-multi-modular MS allow to carry out molecule structure analyses based on multi-stage mass-spectrometry, e.g., a tandem mass-spectrometry (*MS/MS*) or to carry out a spectrometry with multiple-cycle ions accumulation of certain mass range (*MS⟨n⟩*).

All known MSs, with exception of their parallel multi-channel quadrupole types, are single-channel, channel-single-path MSs performed with option to simultaneously analyze only one simply connected path ion flux.

Known parallel multi-channel MSs (containing in one vacuum volume at least one channel) referred to as parallel MSs are performed as single-stage and quadrupole MSs. The USA patent (US Patent 7,381,947, Publ. Jun. 3, 2008) describes a single-stage quadrupole MS, including N, where N is an integer number greater than unity, channels, comprising the following: an ionic source unit, including N ionic source IB-channels, which each has single source of ions; a block-structured docking group provided with a pre-shaping block and a distributing accelerator block, which each contains N IB-channels; a dispersing analyzer block which contains N dispersing analyzer IB-channels; a detector system, including N ion detectors; and controlling computer system. At that dispersing analyzer block comprises N coupled (having common inter-channel electrodes) quadrupole IB-channels, which each is a single-path (single-flow) channel.

This prototype, just as all known alone single-stage MSs with a quadrupole ion trap, is notable for its poor mass weighing accuracy, i.e., up to < 20 ppm and shows a relatively low resolution power up to several tens of thousands.

Main disadvantage of this prototype consists in low value of resolution power/costs ratio. Moreover, this prototype is related to a low-modular MS and allows no to carry out structure analyses.

Known method of spectrometry and mass-spectrometer (MS) described in application for invention (WO/2012/005561, Jan 12, 2012) are selected as the most close prototype to our claimed invention. They provide the following:

- methods of mass-spectrometry: a channel multi-path process (multipath ion flux in one channel); channel single-path process of one off-axis ion flux, all its types with doubly connected surfaces of ion flux cross-sections, inclusive;
- multiple reflection of ion flux using an electric (nonmagnetic) multi-reflecting channel IO sub-system comprising one or more P-multi-reflectors among them comprising a three-dimensional P-multi-reflector; multilayer multi-reflecting IO sub-system, comprising two or more P-multi-reflectors;
- ion flux refraction and/or reflection using new types of electric IO elements which have mean surfaces among them extended IO elements and double-zone IO elements of reflection.

Options of device for claimed method embodiment are developed.

Main disadvantages of this prototype consist in the following:

- Method and device of arbitrary-multipath mass-spectrometry are not provided for concurrent operation of any channel-multipath and channel-single-path IB channels;
- Reflecting 10 sub-systems are not considered, among them IO multi-reflecting sub-systems, as well as any integrated-in-system IO elements, wherein only some random representative species from their numerous potential options are described;

Value of resolution power/costs ratio and MS power potentials are determined mainly by MS modularity level as well as by functional characteristics selected for said group of IB-channels blocks (especially, by resolution power of dispersing analyzer IB-channel and IB-channel of ions trapping, if any).

The MSs with different modularity levels are commonly based on the using of electric (nonmagnetic static electric fields or electric fields with variable components) IB-channels of different resolution capacities (by value of resolution power/costs ratio in their operations as ions trapping IB-channels and mass dispersing analyzing IB-channels).

Nonmagnetic/electric IB-channel differs from other types of IB-channels (e.g., with double focusing, ion cyclotron resonance, sectoral-magnetic, Fourier analyzers etc.) by smaller geometrical dimensions, masses and power capacity, simple and reliable design. Moreover they are relatively cheap. E.g., nonmagnetic time-of-flight MS (TOF MS) based on electric time-of-flight IB-channels surpasses other MS types by its unlimited mass ranges (up to tens of millions of atomic mass) and enhanced analysis rates. Mentioned TOF MS functional capabilities allows to carry out analyses unreachable by means of other types of mass-spectrometers, e.g., analyze time-varying processes or organic matters which are mixtures of different individual compounds (e.g., oil).

Currently there are known electric TOF IB-channels used in the MS which may be classified by four main resolution levels:

- First resolution level specifies the radio frequency (variable fields) TOF IB-channels or IO sub-system $L_D1$ with a straight main optical axis (static field) with a unidirectional linear main axis;
- Second resolution level specifies the TOF IB-channels with electric single-syllable single-section (rotary) planar 10 sub-system $S_{1Up}1$ and with single-syllable single reflecting IO sub-system $\Gamma_D(1,v)1$;
- Third resolution level specifies the TOF IB-channels with single-syllable triple-vertex plane-reflecting planar IO sub-system;
- Fourth resolution level specifies the TOF IB-channels with one of following options: double-vertex linearly multi-reflecting incremental IO sub-system $I_M(2,v)1$ and deflecting helical multi-rotary incremental IO sub-system $S_{4M}1$.

There are known linear radio frequency (variable fields) and electrostatic TOF IB-channels with straight main optical axis (static fields) and with unidirectional linear main axis of the IO sub-system $L_D1$, used in different linear TOF MS (s-TOF MS): AXIMA-LNR [www.analyt.ru] and MSX-4 [www.niivt.ru], which are described in patent RU 2367053. In linear radio frequency IB-channels (e.g., RU 2367053) plate electrodes generating periodic two-dimensional linear high frequency (HF) fields are provided along the axis between ions source and ions detector. HF fields stage up the path and time of ions movement in the TOF MS enhancing ions dispersion by masses (i.e., enhancing MS resolution capacity) as compared to electrostatic IB-channels with straight main optical axis (static fields).

Linear TOF IB-channels in the TOF MS provide only low resolution level (resolution reaches some hundreds) therewith they are small-sized, simple in operations, power- and cost saving.

There are known TOF IB channels with single-syllable single-section (rotary) plane-reflecting 10 sub-system $S_{1Up}1$, integrated in a small-section modular TOF MS (RU 95102394 A1). This TOF MS provides that a single-path ions packet accomplishes a half-rotary trajectory turn from the source to the detector forced by the field of cylindrical electrostatic segment.

There are known single-reflecting TOF MSs (cR-TOF MS) with curve main axis (for example, US 2008/0272287 A1 Nov. 6, 2008Marvin L.; , US 6,903,332, B2, Jun. 7, 2005, Gerhard W. Et al.), comprising IB-channels with spaced from each other ion flux axes (for spaced-apart source and detector). Said patents provide a process consisting in forming an IB channel with reflecting electric field and in guiding ion packet emitted by source in the said reflecting electric field at an acute angle relative to the field intensity vectors, in reflecting ion packets in electric field and further ion packets registration. In US 6 621 073, B1 and US 2008/0272287 A1 the IB channel is performed with uniform electrostatic or reflecting fields enclosed by one or several close-mesh screens extended at slit diaphragms. Major disadvantage of sR-TOF MS consists in relatively low resolution capacity due to a relatively short length of ion packet flying in the TOF MS which depends on TOF MS dimensions. TOF MS resolution capacity in a certain manner depends on the ion flying path length and its resolution capacity may be enhanced through extended ion flying path length.

The known TOF MSs with IB channel of single reflection operate in resolution range from several thousands to several tens of thousands depending on their design, wherein their average sensitivity level is equal to $10^{-4}$.

There are known embodiments of triply-reflecting IB-channel used in a cR-TOF MS (US 6,570,152 B1 May 27, 2003 Johan B.H.; US 6,717,132 B2, Apr. 6, 2004 Jochen Franzen). Said patents provide processes consisting in forming an IB channel with from one to three reflecting electric electrodes and in guiding ion packets emitted by source in the said reflecting electric field at an acute angle relative to field intensity vectors, in reflecting ion packets in electric field and further ion packets registration. In US 6,570,152 B1 May 27, 2003 reflection is provided through use of uniform electric fields enclosed by close-mesh screens. The US 6,717,132 B2, Apr. 6, 2004 proposes reflecting fields of zero-discharge slit diaphragms. Herewith it is assumed that the field of slit diaphragms within area of ion fluxes passage is Cartesian two-dimensional (not available forces acting on the ions in horizontal direction).

Major disadvantage of said IB channels with several reflections consists in unidirectional space-lateral ions flux dispersion at an incremental plane due to space-lateral energy dispersion occurred at each every reflection from the IO reflecting elements. The known TOF MSs operate in resolution range from several thousands to several tens of thousands depending on their design, wherein their average sensitivity level is equal to $10^{-4}$.

Currently most of TOF MSs are performed with linear unidirectional IO sub-system or with single-syllable single-reflecting IO sub-system. Length of ions flux flying path trajectory in these TOF MSs depends on TOF MS dimensions. Now development of TOF MSs wherein length of flying path trajectory may be extended to values much more than the TOF MSs dimensions has a crucial importance in enhancing their mass resolution and mass accuracy.

To substantially extend the length of flying path trajectory within a small volume it is necessary to multiply change directions of trajectory. Two ways of multiple diversions in a sectoral field and multiple reflections in reflecting IO sub-systems are used.

There is known a number of TOF MSs using the IB channels with different types of single-path helical-multirotary sectoral incremental 10 sub-systems $S_{4M}1$ (e.g., Am. Soc. M. S., 2005, 16, (Takaya S., Hisayuki T., Mitsuyasu I., Yoshihiro K.). In single-path helical-multirotary sectoral incremental IO sub-system $S_{4M}1$ spirally shaped trajectories are generated by means of four electrostatic segments. The Am. Soc. M. S., 2005, 16, (Takaya S., Hisayuki T., Mitsuyasu I., and Yoshihiro K.) reported development of a TOF MS with single-path helical-multirotary sectoral incremental IO sub-system $S_{4M}1$, comprising four toroidal electrostatic segments. This TOF MS is notable for its resolution capacity up to 35000 for 300 atomic mass units (amu) at 16 turnover cycles with total trajectory length approximately 20 m. Main disadvantages of this TOF MS are as follows: isochronism in energy of the first order is only achieved; space isochronism of the first order requires to optimizing system; low acceptance; considerable ions energy is required up to 30 KeV.

A number of TOF MSs are known wherein IB channels are used with different types of single-path double-vertex linearly-multi-reflecting incremental IO sub-systems $I_M(2,v)1$ "Inventor's Certificate SU 1725289 A1, dated 07.04.1992, Bull. No. 13"; No. US 7,385,187 B2; Jun. 10, 2008; No. US 7,385,187 B2; Jun. 10, 2008; US 7,982,184 B2 Jul. 19, 2011; Michael Sudakov

Method of double-vertex linearly multi-reflecting mass-spectrometry (MR-TOF MS) and multi-reflecting MS, comprising IB channels with double-vertex linearly-multi-reflecting incremental IO sub-system $I_M(2, v)1$ were proposed for the first time in "Inventor's Certificate SU 1725289 A1, dated 07.04.1992, Bull. No.13". The IB channels with an IO sub-system $I_M(2,v)1$ performed with option enabling the ions to move along the trajectories which projections on its base plane are configured by a linear segment and comprises two single-zone Cartesian-two-dimensional extended P-elements of reflection, arranged opposite to each other at anti-parallel alignment of their averaged front vectors located in one plane (in a M-plane of P-multi-reflecting IO sub-system) and perpendicular alignment to linear axes of extended P-elements of reflection relative to the base plane of reflecting IO sub-system. The ions are submitted to multiple reflections within space between single-zone Cartesian-two-dimensional extended P-elements of reflection at slow drift towards to a detector in a so-called drift trend towards to linear axes of extended P-elements of reflection located in a longwise-incremental plane of IO reflecting sub-system. Cycle numbers and resolution capacity are corrected through changes of ion injection angle. Description of above mentioned Inventor's Certificate stated theoretical concepts necessary to analyze and predict performances of such MR-TOF MSs.

US patent (No. US 7,385,187 B2; Jun. 10, 2008), in elaboration of idea proposed in Inventor's Certificate SU 1725289 A1, dated 07.04.1992, Bull. No. 13, provides that in the IB channels electrostatic lens are regularly arranged between two single-zone extended IO-elements of reflection. Said lens are qualified to confine ion packets along the zigzag trajectory from the ion source to the detector. On the basis of above mentioned concepts the MR-TOF MS of 40000 resolution capacity is developed.

US patent No. 7,385,187 B2 describes also principle of parallel tandem time-of-flight analysis in "embedded times" mode wherein the MR-TOF MS is used as a slow primary ions separator substantially enhancing efficiency of complex biopolymer mixtures analysis. Principle of parallel tandem time-of-flight analysis in "embedded times" mode is based on the use in tandem stages of two TOF MSs with substantially differing (several times) time scales of ions separation.

Document US 7,982,184 B2 Jul.19, 2011, Michael S. proposed an IB channel with an IO sub-system $I_M(2,\nu)1$ which end electrodes are performed with option to turn the ions backwards of drift enabling them to two-run passing through the IO sub-system $I_M(2,\nu)1$.

US patent 2010/008386 A1, Publ. Jan.11.2010 developing concepts of US patent No. 7,385,187 B2; Jun. 10, 2008, proposed to provide the IB-channel with an IO sub-system $I_M(2,\nu)1$ by means of extended P-elements of reflection performed with option to re-modulate the electrostatic field along the direction of ion fluxes propagation aimed at periodical space focusing of ion packages in the line of the longitudinal-vertical incremental direction of ion flux propagation. In addition to this re-modulation of electrostatic fields there is provided at least one isochronic curve of interface surface between pulsed ion source and receiver in the MS. At that, the said extended P-elements of reflection with isochronic curved surface are used additionally to re-modulation of electrostatic field, even though each one of them may be used individually.

Major disadvantage of known MR-TOF MSs consists in that the extended P-elements of reflection are arranged in one plane and the IB channels with an IO sub-system $I_M(2,\nu)1$ are two-dimensional, so require to scanning ions trajectories in unidirectional mode of ions flux. That results in spatial transverse dispersion of ions flux over the plane of scanning (over the longwise vertical incremental plane) ions trajectories, due to spatial transverse energy dispersion occurred in each every reflection at extended wholly-incremental P-element of reflection. After certain path passing the ions flux scatters in direction of parallel longwise-vertical incremental plane of the P-multi-reflector in manner that the mass spectrum gathering by means of detector will prove to be no longer required. Electrostatic lens regularly arranged between two single-zone extended P-elements of reflection and retaining ion packets along a zigzag trajectory from the ion source to the detector through multiple effects on ions paths in nonlinear relations to their energy dispersion substantially limit the MR-TOF MS resolution capacity.

In the IB channel with reflecting IO sub-system wherein two and more ions reflections are performed (e.g., above mentioned triply reflecting and multi-reflecting versions of the IB channels with reflecting IO sub-systems) the IO means of reflection in principle are arranged on one plane and averaged front vectors in principle are arranged anti-parallel to each other.

There are known electric reflecting IO sub-systems (US 7,351,958 B2 Apr. 1, 2008, Marvin L.), wherein a set of front vectors in a IO means of reflection are not parallel and they are selected with option to inter-cancel the spatial dispersions occurred in process of reflection due to different ion kinetic energy in ion packet. The US 7,351,958 B2 Apr. 1, 2008, Marvin L. is accepted as a prototype of reflecting IO sub-system proposed in our invention. Major disadvantages of said prototype are as follows: reflecting IO sub-systems are performed and used to change directions of ions trajectories and there are not considered their potentials to extending time-of-flight dispersion in terms of mass/charge ratios; transverse space focusing, time-of-flight focusing by ions energy in ion packets; there are not considered potential applications of reflecting IO sub-systems with respect to their specific features of implementation and arrangement of IO means of reflection; only local single-zone IO elements of reflection are considered; comprise only even quantity of IO elements of reflection.

General disadvantage of all known reflecting IO sub-systems consists in the fact that their IO means of reflection are arranged in one plane and their averaged front vectors are arranged in one plane.

In reflecting IO sub-systems of the IB channels of known TOF MSs, the IO means of reflection are mainly performed of uniform heights (provided constant longwise-vertical section wherein surfaces of all electrodes are arranged at the same height from a horizontal plane). There are known electric local longwise discontinuously conic IO refracting elements (J. Applied Physics, 1989. T. 59. Issue No.1 (Doskeyev G.A., Spivak, and Lavrov I.F.), performed in forms of conic and wedge-shaped prisms, and related to a category of conic IO deflecting elements. They are performed with inter-electrode boundaries/gaps from the bottom towards to the vertex in crosswise direction to the base plane (height) of conic IO element and they have the mean planes which are the planes of electric field symmetry.

Known IO elements are ineffective in development of high-resolution IO sub-systems with ions flux scanning in arbitrary direction (3D IO sub-system), especially, in reflecting 3D sub-systems, proposed in our invention and which are one of the main instruments of technical solutions of this invention.

To implement the method of mass-spectrometry described in our invention a number of new types of IO elements are provided, as follows: extended and local transversely-discontinuous-conic reflecting IO elements, including single-zone and double-zone elements: vertical-two-zone, horizontal-double-zone and their mixed double-zone types; local transversely discontinuous conic IO refracting elements; 10 elements of reflection with three-dimensional area of reflection, including transversely discontinuous conic IO elements of reflection; extended 10 refracting elements, including transversely discontinuous conic elements.

There are known electric IO elements of reflection related to angled reflecting $v$-type. Our invention provides to use among the 10 elements of reflection such as known electric loop-shaped reflecting elements of $\rho$-type (Inventor's Certificate No. 995156 Bull. No.5, Publ. 07.02.83, Zernov A.A. et al.) and arc-wise reflecting elements of $\bar{\omega}$-type (L.G. Glicman et al. /Nucl. Instr. and Meth. in Phys. Res.363 (1993), two reflecting blocks.

In our invention we propose a multipath method of mass-spectrometry requiring option to simultaneously use a multipath ion flux, its types with multiply connected surfaces of cross-section inclusive, which may be used in time-of-flight mode or in IB-channels having curved main axis in cross-space dispersing mode of any MS, wherein the IO system of MS-channel is designed of two-dimensional or periodic structure, e.g., in documents US 6,717,132 B2, Apr. 6, 2004 and US 2008/0272287 A1 Nov. 6, 2008.

Major objective of this invention is to propose a method of mass-spectrometry and a device for its embodiment based on efficient ion flux control in the MS and aimed at gaining in values of resolution capacity/costs ratios which are resolution/cost indices of different MSs. In this regard versions of mass-spectrometry method and device for its embodiment proposed in this invention cover all modularity and resolution capacity levels of the MSs.

Moreover this invention provides gain in sensitivity, precision and measurement rates of substances compositions and structures concurrently with enhancement of analyzers functional capabilities, analyzers downsizing and their mass reducing. One more problem solved in claimed invention is extension of mass-spectrometry potentials.

Claimed method and device for its embodiment meet the criteria of invention since any prototype solutions were not found as on application filing. Method and device for its embodiment have a number of features substantially distinguishing them from known methods and devices for their embodiments.

Claimed method and device for its embodiment may be implemented on the base of available equipment using master industrial materials, component parts and technologies.

Embodiment of this claimed method of mass-spectrometry provides the following:

(i) Ionize the substance sample in an ionic source unit and remove the ion flux out it, form the ion flux and control its motion including its mass dispersion by ions masses (mass dispersion by values of their mass/charge ratios, m/z) by means of, at least, one magnetic and electric fields generated by groups of ion-conducting blocks composed of ion-conducting IB-channels with boundary surfaces and IO channel subsystem which each is a part of MS-channel with an IO system (series-connected ion-conducting IB-channels and ionic source IB-channel of ionic source unit) wherein the said channel IO system, at least, of one ion-conducting IB-channel is performed being selected from among the series comprising such its types as linear, curved-linear in mode of cross-space mass dispersion and in reflecting mode;
(ii) Register ions, at least, by means of one detector unit of detector system;
(iii) Control and manage the operations of all blocks of the mass-spectrometer as well as to support the data processing by means of controller-computer system.

Main difference of this proposed method from known technique consists in that to form and control ions fluxes, there is used, at least, one characteristic feature which is selected from among the series comprising as follows:

(a) multipath method of mass-spectrometry requiring feasibility of simultaneous mass-spectrometry of, at least, two ions flux paths, among them ions paths with multiply connected surfaces of cross-sections, in which ion flux is supplied by an ionic source unit;
(b) three-dimensional reflecting (3*D*-reflecting) method of mass-spectrometry requiring to use a three-dimensional reflecting IO sub-system (3*D*- reflector), comprising, at least, two IO means of reflection, which set of averaged front vectors are not located on one straight line and they are performed, at least, of one type selected among the series comprising: arc-wise reflecting $\overline{\omega}$-type and loop-shaped reflecting elements of $\rho$-type of double-reflecting block, and angled reflecting IO element of $\nu$-type, and using a 3*D*-reflector for time-of-flight dispersion by ion masses, transverse space focusing and time-of-flight focusing by ions energy in ion packets;
(c) at least, one characteristic feature selected from among the series comprising application of electric fields such as transversely discontinuous conic fields, three-dimensional distribution in area of reflection.

Other features of this proposed method distinguishing it from known technique consist in the following:

- at least, one of its ion-conducting IB channels of ion-conducting MS-block provides the mass-spectrometry selected among the series comprising channel-single-path and channel-multipath modes;
- mass-spectrometry is performed through using, at least, one of the modes selected among the series comprising: single-stage mode, *MS/MS* - type, *MS⟨n⟩*-type, as well as the liquid chromatographs combined with mass-spectrometers *LC/MS,* and through performing series steps of ions flux transfer conforming to any adequate version of modularity level, among them extended-multi-modular version comprising ionic source block, pre-shaping block, distributing accelerator block, block of refinement cell, ions trapping block, further ions accumulation block and dispersing analyzer block;

- mass-spectrometry is provided at least, in one MS-channel through performing series steps of ions flux transfer conforming to the first version of extended-multi-modular operating mode:

(ab) Inject the channel ions flux by an ionic source IB channel in a pre-shaping channel;

(bc) Remove the channel ions flux out of a pre-shaping IB channel and supply it in a distributing accelerator IB channel;

(cd) Remove the channel ions flux out of distributing accelerator IB channel and supply it in an ions trapping IB channel as well as to register channel ions flux, at least, in one detector element of the ions trapping IB channel;

(de) Remove the channel ions flux out of the ions trapping IB channel and supply it in a refinement cell;

- Select among the series comprising {(ec) and (ef)}: remove the channel ions flux out of refinement cell and supply it, depending on channel ions flux composition, after the said ion flux was processed in the refinement cell, at the option, into one of two channels, respectively: in a distributing accelerator IB channel; in an IB channel of further ions accumulation and storage of selected plurality of ions masses;

at least, one cycle (Q11), comprising increments (cd), (de); select among the series comprising {(ec) and (ef)} to accumulate ions of selected masses plurality in an IB channel of further ions accumulation;

- Select among the series comprising (fc) and {(fe) and further (ec)}: remove the channel ions flux out of the IB channels of further ions accumulation and then introduce it, at the option, respectively in one of two channels: in distributing accelerator IB channel; in the refinement cell and further (remove the channel ions flux out of the refinement cell and introduce it in the distributing accelerator IB channel);

at least, one cycle (Q12), comprising (Q11) succeeded by selection among the series comprising (fc) and {(fe), and further (ec)};

(cg) Remove the channel ions flux out of the distributing accelerator IB channel and introduce it in the dispersing analyzer IB channel, as well as to register the channel ions flux, at least, in one detector element of dispersing analyzer IB channel;

- depending on the results of performance on the increment (cg), perform the increments, at the option, according to one of two series (i) and (ii):

(i) at least, one cycle (Q13), comprising performance of all sequential increments, beginning with (ab) through (cg) inclusive, mentioned in this paragraph;

(ii) select among the series comprising (ge) or {(gc) and further (ce)}: remove the channel ions flux out of dispersing analyzer of its IB channels and introduce the channel ions flux, at the option, respectively in one of two channels: in the refinement cell; in the distributing accelerator IB channel and further (remove the channel ions flux out of distributing accelerator IB channels and introduce it in the refinement cell); at least, one cycle (Q14), comprising performance of all increments beginning with selection among the series comprising {(ec) and (ef)} through (cg) inclusive;

- at least, in one MS-channel the mass-spectrometry is performed through sequential increments in transferring channel ions flux conforming to the second version of extended multi-modular operation mode:

(ab); (bc); (cd); (de);

- select among the series comprising {(ec) and (ef)};

(Q11);

- select among the series comprising (fc) and {(fe), and further (ec)}; (cg);
- depending on results of performance on the increment (cg), perform the increments according to one of two series (i) and (ii):

(i) at least, one cycle (Q23), comprising sequential performance of all increments, beginning with (ab) through (cg) inclusive, mentioned in this paragraph;

(ii) select among the group of increments, comprising (ge) and {(gc), and further (ce)}, at least, one cycle of increments (24), comprising sequential performance of all increments, beginning with beginning with selection among the series comprising (ec) and (ef) through (cg) inclusive;

- at least, in one MS-channel the mass-spectrometry is performed through sequential increments in transferring channel ions flux conforming to the version of multi-modular operation mode, by-passing the IB channel of further ions accumulation, in case of extended multi-modular MS, that is also true for failing IB channel of further ions accumulation in the MS structure:

(ab); (bc); (cd); (de); (ec);
(at least, one cycle (Q31), comprising (cd), (de) and (ec) increments;
(cg);

- depending on the results of performance on the increment (cg), perform the increments according to one of two series (i), and (ii):

(i) at least, one cycle (Q33), comprising sequential performance of all increments beginning with (ab) through (cg) inclusive;
(ii) select among the group of increments, comprising (ge) and {(gc) and further (ce)}; at least, one cycle (Q34), comprising performance of all increments, beginning with (ec) through (cg) inclusive;

- at least, in one MS-channel the mass-spectrometry is performed through sequential increments in transferring channel ions flux conforming to version of mean modularity level of operation mode without of ions trapping, by-passing the IB channels of further ions accumulation and IB channel of ions trapping in version of extended multi-modular MS, that is also true for a failing IB channels of further ions accumulation and IB channel of ions trapping in the MS structure:

(ab); (bc); (cg); (ge) or {(gc) and further (ce)}; (ec); (cg);

- depending on results of performance on the increment (cg), perform the increments according to one of two series (i) and (ii):

(i) at least, one cycle (Q43), comprising sequential performance of all increments, beginning with (ab) through (cg) inclusive;
(ii) select among the group of increments, comprising (ge) and {(gc), and further (ce)}; at least, one cycle of increments performing, beginning with (ec) through (cg) inclusive;

- at least, in one MS-channel the mass-spectrometry is performed through sequential increments of channel ions flux transferring in version of mean modularity level of operation mode without ions refinement, by-passing the IB channel of further ions accumulation and IB channel of refinement cell in version of extended multi-modular MS, that is also true for failing IB channel of further ions accumulation and IB channel of refinement cell in the MS structure:

(ab); (bc); (cd);
(dc) Remove the channel ions flux out of ions trapping IB channel and introduce it in the distributing accelerator IB channel;
at least, one cycle (Q51), comprising (cd) and (dc) increments;
(cg);

- at least, in one MS-channel the mass-spectrometry is performed through sequential increments in transferring of channel ions flux conforming to a small-modular version of operation mode, by-passing the IB channel of further ions accumulation, ions trapping IB channel and IB channel of refinement cell in version of extended multi-modular MS, that is also true for failing IB channel of further ions accumulation, ions trapping IB channel and IB channel of refinement cell in the MS structure:

(ab); (bc); (cg);

- Path ion fluxes received from different sources (e.g.: from different objects/processes; from different parts of one object/process), are supplied in ion-conducting blocks through different outlet gates of ionic source system.
- Path ion fluxes, outgoing from different outlet gates of ionic source unit, are supplied independently of one other or in time correlation dependence from one another, e.g., at the same time or by turns in specified time frame;
- Pre-filtering is performed with option to select any preferred ranges of masses and/or energy;
- Values of dispersion by masses are controlled;
- Mass-spectrometry is performed concurrently to the energy-spectrometry within a specified interval of energy spectrum range;
- Transverse space focusing of ions flux is performed along the direction of its moving mainly by means of regulated pulsating voltage;

- Each path ion flux is detected by an individual detector of the detector system;
- Ionic source is used in one of the modes selected among the series comprising continuous ions flux generation and pulse ions flux generation;
- One of cyclicity modes is used being selected among the series comprising single-running and multi-running ions passage through the IB channel;
- Time-of-flight (TOF) mass-spectrometry is performed, at least, in one of ion-conducting IB channels of the ion-conducting MS-block;
- performing, at least, one of the *MS/MS*-type, *MS⟨n⟩*-type modes, i. e., through using liquid chromatographs combined with mass-spectrometers *LC/MS* provides that the time-of-flight mass-spectrometry is implemented by means of "embedded times" method.

To perform this proposed method of mass-spectrometry we provide new types of IO elements to refracting and reflecting charged particles fluxes (ionic fluxes inclusive) notable for their geometric design properties and electrical potential-functional features.

Main distinguishing feature of proposed 10 elements to refracting and reflecting charged particles fluxes consists in that they are performed being selected among the series comprising as follows: extended and local transversely discontinuous conic reflecting IO elements, among them single-zone, double-zone ones: vertical-two-zone, horizontal-two-zone, and their mixed double-zone types; local transversely discontinuous conic refracting IO elements; reflecting IO elements with three-dimensional reflecting area, comprising the transversely discontinuous conic reflecting IO elements; extended refracting IO elements, the transversely discontinuous conic IO elements inclusive.

Other features of proposed IO element o refract and reflect the charged particles fluxes distinguishing it from other known control sub-systems consist in the following:

- it is performed being selected among the series comprising: without diaphragm; with diaphragm, arranged transversely to a main axis of the IO element and performed with curvatures $R_X$ and $R_Y$, respectively, in two mutually perpendicular directions of symmetry vertical which values are selected as restrained within ranges:

$$(-\frac{h_X}{2}) \le R_X \le \frac{h_X}{2} \text{ and } (-\frac{h_Y}{2}) \le R_Y \le \frac{h_Y}{2},$$ where: $h_X$ and $h_Y$ are internal electrode height and width, respectively;

- it is selected among the series comprising the types such as follows: diaphragm is performed separately from its adjacent electrode; diaphragm is performed inseparably with its adjacent electrode;
- it is selected among the series comprising the types such as follows:

  - local complete element wherein, at least, one of electrodes is performed as a single-piece and its transverse section is formed through integrating an arbitrary quantity of constituting parts, selected among the group of shapes: straight line, segment of second-order curve, including formation of ellipsoid, circle and any closed curve;
  - local and extended element, wherein, at least, one electrode is performed longwise-doubly-discontinuous which longitudinal section is formed horizontal-doubly discontinuous and resulting segments formed herein are arranged symmetrically on the both sides of the horizontal plane;

- local element with mutually transverse electrodes, wherein, at least, two electrodes are performed mutually transverse, one of them being performed as the above mentioned longwise-doubly-discontinuous, while one other is performed as vertical-doubly discontinuous comprising two, in particular, identical constituting parts, arranged symmetrically on the both sides of the longitudinal-vertical plane; in a particular case the said two electrodes are performed as cross wisely integrated relative to each other and constituting segments of vertical-doubly-discontinuous electrode are arranged in discontinuity space of two constituting parts of horizontal-doubly discontinuous electrode;
- its transversely discontinuous conic type is performed within inter-electrode limits wherein electrodes are spaced relatively to each other and arranged cross wisely to the base plane of conic IO element and selected among the series comprising the types as follows:
- longwise-conic IO element performed with longwise-vertical extension consisting in, at least, one extension, on average in, at least, one direction of longwise vertical section;
- transversely conic IO element performed with horizontal extension consisting in, at least, one extension, on average, in, at least, one direction of horizontal section;
- Crosswise conic 10 element performed with longwise-vertical and horizontal extensions, including its longwise two-dimensional type and bisymmetrical type, having two mutually perpendicular planes of symmetry which one is a horizontal plane, one other is a longwise-vertical plane of symmetry intercrossing along the axis of symmetry of the bisymmetrical IO element;

- Its longwise-vertical extension is performed being selected among the series comprising: homogeneous and transitional dimensional types, wherein its transitional variable type is performed being selected among the series of its sub-types, comprising, at least, one transition selected among the series comprising: parallel-stepwise transition, angular inclined transition, inclined-stepwise transition;
- at least, two its adjacent electrodes are performed with inter-electrode limits wherein configuration of its projection onto a horizontal plane is selected among the series comprising: straight line for local and extended elements; segment of second-order curve for local element; periodic segments of second-order curve for extended element, forming a sectoral trans-bending IO element with sectoral trans-bending field distribution;
- crosswise-vertical section configuration, at least, of one of its longwise-discontinuous electrodes is performed being selected among the series comprising: straight line for local and for extended 10 elements; segment of second-order curve for local IO element; straight line and periodic segments of second-order curve for extended 10 element;
- constituting segments of its electrode configured as segments of second-order curve are arranged being selected among the series comprising convexities to each other and concavities to each other;
- reflecting type is performed being selected among the series comprising the following: without closure and with closure from the side of ions reflection which is arranged crosswise to the main axis of IO element and performed with curvatures $R_X$ and $R_Y$, respectively, in two mutually perpendicular directions relatively to the vertical of symmetry, which values are selected being limited within range of $(-\frac{h_X}{2}) \leq R_X \leq \frac{h_X}{2}$ and $(-\frac{h_Y}{2}) \leq R_Y \leq \frac{h_Y}{2}$, where:

$h_X$ and $h_Y$ are internal electrode height and width, respectively;

- its type with closure is performed being selected among the series comprising the following: closure performed separately of its adjacent electrode; closure performed inseparably with its adjacent electrode;
- its reflecting type comprises, at least, one of electrodes from the side of ions reflection and it is performed with curvature, at least, in one of two mutually perpendicular directions of the vertical of symmetry;
- it is performed as a double-zone IO element of reflection with single area of reflection, with individual zones to entering ions flux and exiting ions flux from it which are separated and it comprises, at least, one of optional modes combinations: at least, one inter-zonal electrode constituting segment being common of two zones and forming an electrode-connected IO element; one of the said zones comprises, at least, one electrode performed separately of electrodes in other zones, at that the angle of divergence $\gamma_{n12}$, defined by angle, between the single-unit front vectors $\dot{n_1}$ and $\dot{n_2}$, respectively, of the entry zone and exit zone, which is confined within range $0 < \gamma_{n12} \leq \frac{\pi}{2}$;
- it is performed being selected among the series comprising its types generated at different values of projections of the said angle of divergence: vertical-double-zone type, wherein conditions are satisfied for value of projection $\gamma_{n12\vee} = 0$ onto horizontal plane and value of projection $\gamma_{n12\wedge} \neq 0$ onto vertical plane; horizontal-double-zone type, wherein conditions are satisfied for value of projection $\gamma_{n12\vee} \neq 0$ onto horizontal plane and value of projection $\gamma_{n12\wedge} = 0$ onto vertical plane; mixed-double-zone type, wherein conditions are satisfied for value of projection $\gamma_{n12\vee} \neq 0$ onto horizontal plane and value of projection $\gamma_{n12\wedge} \neq 0$ onto vertical plane;
- spaced segments of its adjacent electrodes of two zones are provided with uncoupled separate electrodes and have identical electric potentials;
- spaced segments of its adjacent electrodes of two zones are provided with uncoupled separate electrodes and have different electric potentials;
- its vertical-double-zone type is performed symmetrically;
- its extended type is selected among the series comprising:

  - integrally-extended IO element performed with no spacing electrodes in direction of axis of extension ;
  - massively extended IO element comprising a massive of local IO elements, arranged, in particular, identically one above the other along the selected IO element axis of extension, and their front edges are arranged in one plane;
  - mixed extended IO element comprising, at least, one local IO element and one integral-extended IO element;

- its integral-extended type is performed being selected among the series comprising two-dimensional conic element, three-dimensional element of periodic structure, in particular, periodic doubly symmetrical element;
- its massively extended type is performed being selected among the series comprising two-dimensional element, three-dimensional element of periodic structure, especially, periodic doubly symmetrical element, wherein value of

acute angle $\omega_{\angle}$ between mean planes of the local elements and the plane perpendicular to the axis of extension is confined within range $0 \leq \omega_{\angle} < \dfrac{\pi}{2}$ ;

- provided that the $\omega_{\angle} = 0$ its two adjacent identical local IO elements are performed as electrode-connected;

To implement this method of mass-spectrometry we propose reflecting IO sub-systems to control the ion flux, comprising 10 means of reflection.

Main feature of proposed reflecting IO sub-systems distinguishing them from known IO sub-systems consists in that they are performed comprising, at least, one characteristic feature selected among the series comprising as follows:

(a) multi-vertex three-dimensional reflecting IO sub-system (3D-reflector), comprising, at least, two IO means of reflection, which plurality of averaged front vectors is not located on one straight line and it is performed at least, of one type, selected among the series comprising arc-wise reflecting $\overline{\omega}$-type and loop-shaped reflecting $\rho$-type of two reflecting blocks and angled reflecting IO element of reflection of $\nu$-type wherein *3D*-reflector is used for time-of-flight dispersion by ion masses, transverse space focusing, time-of-flight focusing by ions energy in ion packets;

(b) at least, one IO element is selected among the series comprising the following: extended and local transversely discontinuous conic reflecting IO elements, among them single-zone, two-zone: vertical-two-zone, horizontal-two-zone, and their mixed double-zone types; local transversely discontinuous conic refracting IO elements; 10 elements of reflection with three-dimensional area of reflection, among them transversely discontinuous conic IO elements of reflection; extended refracting 10 elements, among them transversely discontinuous conic IO elements.

Other features of proposed reflecting IO sub-system distinguishing it from known IO sub-systems consist in the following:

- it is performed being selected among the series comprising the types such as follows: single-syllable reflecting $A_{\kappa U(ps)}(\kappa, f)$ and multi-syllable reflecting $A_{\kappa M}(\kappa, f)$, where: the symbol A designates the type of reflecting IO sub-system formation, which depends on geometry of each IO means of reflection and on the potentials at each their electrode as well as on the spatial arrangement of IO means of reflection relative to each other and mutual orientation of their averaged front vectors; symbol $\kappa$ define the quantity of IO means of reflection, which complies with the quantity of vertices in the reflecting IO sub-system; symbol $U$ is a feature of single-syllable reflecting capacity of the 10 sub-system, wherein IO means of reflection is selected among the types as follows: extended and local; symbol $(ps)$ is a two-position index $(ps) = p, s$, and designates that the reflecting IO sub-system is a plane-reflecting one at $(ps) = p$, and incrementally reflecting at $(ps) = s$; symbol $M$ is a feature of multi-syllable reflecting capacity of the IO sub-system, wherein the IO means of reflection are performed being extended; combination of $(\kappa, f)$ based on the quantity $\kappa$ and types $f = \nu, \rho, \overline{\omega}$ of IO means of reflection designates the type of IO means of reflection in each vertex of the IO reflecting sub-system, e.g., by numbers of the IO means of reflection, assigned according to the sequence of ions reflections along the ions flux movement;
- it is performed as a single-syllable reflecting IO sub-system with local IO means of reflection types as follows: plane-reflecting type at $(ps) = p$ and all the IO means of reflection are arranged on the same level in parallel with a base plane of reflecting IO sub-system; incrementally reflecting type at $(ps) = s$ and local IO means of reflection are arranged on different levels, in particular, at periodic distance relatively to the base plane of the reflecting IO sub-system;
- it is performed of narrow configuration wherein distance between two conjugated IO means of reflection is larger than the dimensions of IO means of reflection themselves and larger than the distance between two adjacent non-conjugated IO means of reflection, if any;
- at least, one of its IO means of reflection is performed being selected among the series comprising:

(a) local and massively extended horizontally-continuous means of reflection, wherein the value of angle $\omega_{\Sigma\lambda 1}$ between a horizontal plane of IO means of reflection and base plane of reflecting IO sub-system is constrained within the range $0 \leq \omega_{\Sigma\lambda 1} < \dfrac{\pi}{6}$ , moreover the IO sub-system is performed with option allowing the averaged trajectory of path ion flux to pass over the M-surface of the IO means of reflection and in its proximity;

(b) local and integrally extended vertical-continuous IO means of reflection, wherein the value of angle $\omega_{\Sigma\lambda 2}$ between a longwise-vertical plane of the 10 means of reflection and base plane of reflecting IO sub-system is constrained within the range $0 \leq \omega_{\Sigma\lambda2} < \dfrac{\pi}{6}$, moreover the IO sub-system is performed with option allowing the averaged trajectory of path ion flux to pass over the longitudinal-vertical plane of the IO means of reflection and in its proximity;

- its single-syllable reflecting type $A_{\kappa U(ps)}(\kappa,f)$ is selected among the series comprising the types as follows $A_{\kappa U(ps)}(\kappa, v\overline{\omega})$ = $A_{\kappa Up}(v)$, $A_{\kappa Us}(v)$, $A_{\kappa Up}(\overline{\omega})$, $A_{\kappa Us}(\overline{\omega})$: planar type $A_{\kappa Up}(v)$ and incremental type $A_{\kappa Us}(v)$, which each comprises the angled reflecting $v$-type of IO element of reflection; planar type $A_{\kappa Up}(\overline{\omega})$ and incremental type $A_{\kappa Us}(\overline{\omega})$, which each comprises the IO means of arc-wise reflecting $\overline{\omega}$-type;

- its multi-syllable reflecting type $A_{\kappa M(ps)}(\kappa, v\overline{\omega})$ is selected among the series comprising the types as follows: $A_{\kappa M(ps)}(\kappa, v\overline{\omega})$=$A_{\kappa Mp}(v)$, $A_{\kappa Ms}(v)$, $A_{\kappa Mp}(\overline{\omega})$, $A_{\kappa Ms}(\overline{\omega})$: planar type $A_{\kappa Mp}(v)$ and incremental type $A_{\kappa Mp}(\overline{\omega})$, which each comprises the angled reflecting $v$-type of reflecting 10 element; planar type $A_{\kappa Mp}(\overline{\omega})$ and incremental type $A_{\kappa Ms}(\overline{\omega})$, which each comprises IO means of arc-wise reflecting $\overline{\omega}$-type;

- it is performed as a single-syllable N- shaped $N_{U(ps)}(2,f)$ type, comprising two 10 means of reflection, which value of angle $\beta_{(12)1}$ between vectors, read counterclockwise from the unitary vector $\overset{\centerdot}{n}_{(12)}$ of conjugating axis of the IO means of reflection in direction towards to the unitary averaged frontal vector $\overset{\centerdot}{n}_1$ of the first IO means of reflection is constrained within the range $0 < \beta_{(12)1} \leq \dfrac{\pi}{4}$ and $\dfrac{7\pi}{4} \leq \beta_{(12)1} < 2\pi$, value of angle $\beta_{(12)2}$ between vectors, read counterclockwise from the vector $\overset{\centerdot}{n}_{(12)}$ in direction towards to the unitary averaged frontal vector $\overset{\centerdot}{n}_2$ of the second IO means of reflection, is constrained within the range $\pi < \beta_{(12)2} \leq \dfrac{5\pi}{4}$ at $0 < \beta_{(12)1} \leq \dfrac{\pi}{4}$, and $\dfrac{3\pi}{2} \leq \beta_{(12)2} < \pi$ at $\dfrac{7\pi}{4} \leq \beta_{(12)1} < 2\pi$;

- it is performed as a single-syllable $\mho$-shaped $\mho_{U(ps)}(2,f)$ type, comprising two IO means of reflection conjugated with a single-section electric segment arranged between them, wherein the value of angle between vectors, read counterclockwise from the unitary vector of conjugating axis of the first 10 means of reflection with electric segment in direction towards to the unitary averaged frontal vector of the first IO means of reflection, is constrained within the range $0 < \beta_{(12)1} \leq \dfrac{\pi}{4}$ and $\dfrac{7\pi}{4} \leq \beta_{(12)1} < 2\pi$, value of angle $\beta_{(12)2}$ between the vectors, read counterclockwise from the unitary vector of conjugating axis of electric segment with the second IO means of reflection in direction towards to unitary averaged frontal vector of the second IO means of reflection, is constrained within the range $\pi < \beta_{(12)2} \leq \dfrac{5\pi}{4}$ and $\dfrac{3\pi}{2} \leq \beta_{(12)2} < \pi$;

- it is performed as a multi-syllable $C$-shaped incrementally reflecting $C_M(2,f)$ type, comprising two IO means of reflection conjugated with a single-section electric segment arranged between them, which in complex with the 10 means of reflection is performed with option of multiple reflection in two extended IO means of reflection through a segment of cylindrical capacitor wherein the ions flux moves along the $\hbar$-plane of the IO sub-system;

- it is performed as a multi-syllable $\Lambda$-shaped incrementally reflecting $\Lambda_M(3,f)$ type, comprising three extended IO means of reflection, which unitary averaged front vectors $\overset{\centerdot}{n}_1$ and $\overset{\centerdot}{n}_3$ of the first and third IO elements of reflection, respectively, are directed toward the second IO means of reflection, unitary axial vector $\overset{\centerdot}{n}_2$ of the second IO means of reflection is directed toward the first and second IO means of reflection, performed with option of multiple reflection wherein the ions flux moves along the $\hbar$- plane of the IO sub-system;

- it is performed as a multi-vertex type of the *PLR*-sub-system (*PLR* is a loop reflecting projection) comprising, at least, one high-resolving double-vertex projection-loop-shaped-reflecting *HR2PLR*-block (*HR2PLR* - high resolving double-vertex projection loop-reflecting) comprising two IO means of reflection, which value of angle $\beta_{(12)1}$ between vectors, read counterclockwise from the unitary vector $\overset{\cdot}{n}_{(12)}$ of the conjugating axis of the IO means of reflection in direction towards to the unitary averaged frontal vector $\overset{\cdot}{n}_1$ of the first IO means of reflection, is constrained within the range $0 \prec \beta_{(12)1} \leq \dfrac{\pi}{4}$ and $\dfrac{7\pi}{4} \leq \beta_{(12)1} \prec 2\pi$, while the value of angle $\beta_{(12)2}$ between vectors, read counterclockwise from the vector $\overset{\cdot}{n}_{(12)}$ in direction towards to unitary averaged frontal vector $\overset{\cdot}{n}_2$ of the second IO means of reflection, is constrained within the range $\pi \prec \beta_{(12)2} \leq \dfrac{5\pi}{4}$ at $\dfrac{7\pi}{4} \leq \beta_{(12)1} \prec 2\pi$, and $\dfrac{3\pi}{2} \leq \beta_{(12)2} \prec \pi$ at $0 \prec \beta_{(12)1} \leq \dfrac{\pi}{4}$;

- its double-vertex type $\Re_{2U(ps)}(2, f)$ of the *PLR*-sub-system comprises two 10 means of reflection $\kappa = 2$, performed as a type (forming) of the said *HR2PLR*-block;
- its IO means of reflection are performed identical, wherein the point of intersection, defined for the *HR2PLR*- block by the said angles $2\beta_{(12)1}$ and $2\beta_{(12)2}$ of the path axes of the 10 means of reflection in projection on the base plane of reflecting IO sub-system, is a projection nodal point of the *HR2PLR*- block;

- three-vertex type $\Re_{3U(ps)}(3, f)$ of the *PLR*-sub-system comprises three 10 means of reflection $\kappa = 3$, two of them are performed as a type of the *HR2PLR* - block, and the IO means of reflection, arranged off the *HR2PLR* -block is a third extra 10 means of reflection, and its spatial arrangement is selected among the series comprising the versions as follows: on the axis defined by the angle $2\beta_{(12)1}$ of the said *HR2PLR* -block and arranged adjacent to the second IO means of reflection of the *HR2PLR* - block; on the axis defined by the angle $2\beta_{(12)2}$ of the said *HR2PLR*-block and arranged adjacent to the first IO means of reflection of the *HR2PLR*-block;
- spatial arrangement of its third extra 10 means of reflection is selected among the series comprising the types such as a triangle formed by straight lines, connecting each of two 10 means of reflection: rectangular and equilateral;
- value of angle $\beta_{(12)3}$ between the vectors, read counterclockwise from the unitary vector $\overset{\cdot}{n}_{(12)}$ of conjugating axis of the first and second 10 means of reflection in direction towards to the unitary averaged front vector $n_3$ of the third extra IO means of reflection, is constrained within the range $0 \leq 2\beta_{(12)3} \leq 0{,}6\pi$;

- any of four-vertex types $\Re_{4U(ps)}(4, f)$ and $\Re_{4M}(4, f)$ of the *PLR*-sub-system are performed being selected among the group providing their arrangement as follows: symmetrically and anti-symmetrically to their longitudinal-vertical plane, which is as well their longitudinal nodal plane; doubly symmetrical arrangement relatively to the longwise-vertical and transversely vertical planes, cutting each other along the axial line of the IO sub-system, passing through a common projection-nodal point and perpendicular to the base plane of the IO sub-system;
- two its adjacent IO elements of reflection are selected among the group comprising electrode-connected and electrode-separated (non-jointed) IO elements;

- any of its four-vertex types as follows: $\Re_{4U(ps)}(4, f)$ and $\Re_{4M}(4, f)$ of the *PLR*-sub-system provides four IO means of reflection, performed as two *HR2PLR*-blocks, docked at their projection-nodal points forming a two-loop IO sub-system with one common projection-nodal point.

To implement the claimed method of mass-spectrometry we propose IB channels to generate and control the movement of channel ions flux of charged particles, comprising the following:

(i) at least, two boundary surfaces specified being selected among the series comprising a surface, conditionally specified, a surface coinciding with a boundary electrode of the channel IO sub-system, which are performed with exit gates wherein any one of electrodes is performed, at least, with one exit gate to passing the channel ions flux of charged particles provided that it consists with a selected boundary surface;

(ii) channel IO sub-system of the ion-conducting IB channel, performed being selected among the series comprising such its types as linear, curvilinear with cross-space mass dispersion and reflecting IO sub-system,

Main feature of the proposed IB channel distinguishing it from the known IB channels consists in that it is performed comprising, at least, one characteristic feature, selected among the group comprising as follows:

(a) at least, with two exit gates and with option to use it in a multi-path mode consisting in a concurrent use of, at least, two paths of ions flux, among them ions paths with multiply connected surfaces of the cross-section;

(b) at least, with one three-dimensional reflecting IO sub-system (3$D$-reflector), comprising, at least, two IO means of reflection, plurality of averaged front vectors not located on one straight line and performed at least, of one type, selected among the series comprising: arc-wise reflecting $\overline{\omega}$-type and loop-shaped reflecting $\rho$-type of doubly-reflecting blocks and angled reflecting $\nu$-type of the IO element of reflection, wherein a 3$D$-reflector is used for time-of-flight dispersion by ion masses, transverse space focusing, time-of-flight focusing by ions energy in the ions packets;

(c) at least, with one IO element selected among the series comprising the following: extended and local transversely discontinuous conic reflecting IO elements, among them single-zonal and two-zonal: vertical-two-zonal, horizontal-two-zonal and their mixed two-zonal types; local transversely discontinuous conic refracting 10 elements; refracting IO elements with three-dimensional refracting area, among them transversely discontinuous conic refracting 10 elements; extended refracting IO elements, among them transversely discontinuous conic ones.

Other features of proposed IB channel distinguishing it from other known IB channels consist in the following:

- it is performed being selected among the series comprising its types as follows:

  - with single-syllable unidirectional linear 10 sub-system $L_D j_{LD}$ with $j_{LD} \geq 2$ ;
  - with single-syllable single-reflecting 10 sub-system $\Gamma_D(1,f)j_{\Gamma D}$ with $j_{\Gamma D} \geq 2$;
  - with single-syllable N-shaped IO sub-system $N_{U(ps)}(2,f)d_{NU(ps)}j_{NU(ps)}$, segregated into single-syllable N -shaped planar reflecting $N_{Up}(2,f)d_{NUp}j_{NUp}$ and single-syllable N-shaped incrementally reflecting $N_{Us}(2,f)d_{NUs}j_{NUs}$ IO sub-systems;

  - with single-syllable $\mho$-shaped IO sub-system $\mho_{U(ps)}{}_{(2,f)}d^{}_{\mho U(ps)}j_{\mho U(ps)}$ , segregated into single-syllable $\mho$-shaped planar-reflecting $\mho_{Up}{}_{(2,f)}d_{\mho Up}j_{\mho Up}$ and single-syllable $\mho$-shaped incrementally reflecting $\mho_{Us}{}_{(2,f)}d_{\mho Us}j_{\mho Us}$ IO sub-systems;
  - with single-syllable $\Sigma$-shaped 10 sub-system $\Sigma_{U(ps)}(3,f)d_{\Sigma U(ps)}j_{\Sigma U(ps)}$, segregated into single-syllable $\Sigma$-shaped planar reflecting $\Sigma_{Up}(3,f)d_{\Sigma Up}j_{WUp}$ and single-syllable $\Sigma$-shaped incrementally reflecting $\Sigma_{Us}(3,f)d_{\Sigma Us}j_{\Sigma Us}$ IO sub-systems;
  - with single-syllable $n$-segmented sectoral IO sub-system $S_{nU(ps)}j_{SnU(ps)}$ with $1 \leq n \leq 4$ and $j_{nS(ps)} \geq 2$, segregated into single-syllable $n$-segmented sectoral planar $S_{nUp}j_{SnUp}$ and single-syllable $n$-segmented sectoral incremental $S_{nUs}j_{SnUs}$ 10 sub-systems;
  - with helical-multi-rotary sectoral incremental IO sub-system $S_{4M}j_{S4s}$;

  - with single-syllable multi-vertex $PLR$-sub-system $\Re_{\kappa U(ps)}(\kappa, f)d_{\Re\kappa U(ps)}j_{\Re\kappa U(ps)}$ segregated into single-syllable multi-vertex planar-reflecting $PLR$-sub-system $\Re_{\kappa Up}(\kappa, f)d_{\Re\kappa Up}j_{\Re\kappa Up}$ and single-syllable

  multi-vertex incrementally reflecting $PLR$-sub-system $\Re_{\kappa Us}(\kappa, f)d_{\Re\kappa Us}j_{\Re\kappa Us}$, which as well are segregated by quantity $\kappa = 2, 3, 4$ of the reflecting IO means;
  - with double-vertex linearly multi-syllable incrementally reflecting IO sub-system $I_M(2,f)d_{1M}j_{1M}$ with $J_{1M} \geq 2$ ;
  - with double-vertex $C$-shaped multi-syllable incrementally reflecting IO sub-system $C_M(2,f)d_{CM}j_{CM}$ ;
  - with three-vertex $\Lambda$-shaped multi-syllable incrementally reflecting 10 sub-system $\Lambda_M(3,f)d_{\Lambda M}j_{\Lambda M}$,

  - with multi-syllable four-vertex $PLR$ -sub-system

$$\Re_{4M(ps)}(4,f)d_{\Re 4M(ps)}j_{\Re 4M(ps)},$$ segregated into multi-syllable four-vertex planar reflecting

$PLR$-sub-system $\Re_{4Mp}(4,f)d_{\Re 4Mp}j_{\Re 4Mp},$ multi-syllable four-vertex incrementally reflecting $PLR$-sub-

system $\Re_{4Ms}(4,f)d_{\Re 4Ms}j_{\Re 4Ms},$

wherein:

- symbols such as $j_{LD}, j_{\Gamma D}, j_{NUp}, j_{NUs}, j_{Up}, j_{Us}, j_{\Sigma Us}, j_{\Sigma Up}, j_{nSp}, j_{nUs}, j_{\Re\kappa Up}, j_{\Re\kappa Us}, j_{IM}, j_{CM}, j_{\Lambda M}, j_{\Re 4Mp},$

$j_{\Re 4Ms}$ define quantity of paths in the IB channels, respectively designated by the said symbols;

- symbols such as $d_{NUs}, d_{\mho Us}, d_{\Sigma Us}, d_{\Re\kappa Us}, d_{IM}, d_{CM}, d_{\Lambda M}, d_{\Re 4Ms}, d_{NUp}, d_{\mho Up}, d_{\Sigma Up},$

$d_{\Re\kappa Up}, j_{\Re 4Mp},$ define the types of trajectory and ions scanning in incremental planar reflecting 10 sub-system, respectively designated by the said symbols:

Types of canning $d_{NUs}, d_{\mho Us}, d_{\Sigma Us}, d_{\Re\kappa Us}, d_{IM}, d_{CM}, d_{\Lambda M}, d_{\Re 4Ms}$ are selected among the series comprising harmonic $h$, loop-shaped harmonic $h\rho$, arc-wise - harmonic $h\overline{\omega}$;

types scanning $d_{NUp}, d_{\mho Up}, d_{\Sigma Up}, d_{\Re\kappa Up}$ are selected among the series comprising planar reflecting without transition $p$, planar reflecting with angled transition $p\nu$, planar reflecting with loop-shaped transition $p\rho$, planar reflecting with arc-wise transition $p\overline{\omega}$;

- type of scanning $d_{\Re 4Mp}$ is selected among the series comprising planar reflecting with angled transition $p\nu$,

planar reflecting with loop-shaped transition $p\rho$, planar reflecting with arc-wise transition $p\overline{\omega}$ ;

- its planar reflecting IO sub-system comprises single-plane reflection and types of scanning as follows: planar reflecting with angled transition $p\nu$, planar reflecting with loop-shaped transition $p\rho$, planar reflecting with arc-wise transition $p\overline{\omega}$, comprising, respectively, angled reflecting 10 element of $\nu$-type, arc-wise reflecting IO element of $\overline{\omega}$-type and loop-shaped reflecting IO element of $\rho$-type of the doubly reflecting block, which spatial orientations of horizontal planes are selected considering architecture of the IO sub-system and assigned task;
- planar reflecting 10 sub-system provides that the mean planes of angled reflecting 10 element of $\nu$-type, arc-wise reflecting 10 element of $\overline{\omega}$-type and loop-shaped reflecting element of $\rho$-type in double reflecting block are arranged relatively to a base plane of the planar reflecting 10 sub-system at an acute angle, which value is larger than the zero and less than $\dfrac{\pi}{2}$ ;

- additionally it comprises, at least, one 10 means of refraction selected among the series comprising its extended and local types as follows:

- IO means of refraction with straight axis, performed with option to be used in one of the modes, among them telescopic operation mode and space focusing, at least, in one of transverse directions towards to the ions path motion;
- IO means of refraction with curved axis providing external refracting transition, performed with option to be used in one of the modes, among them, telescopic operation mode and space focusing, at least, in one of transverse directions towards to the ions path motion;

- its extra IO means of refraction is provided, at least, in one of positions selected among the group comprising the following: arrangement at the entry, at the exit; between the 10 means of reflection, covering a front area of path axis of the reflecting IO sub-system, and performed being selected among the series comprising the types as follows: extended two-dimensional and periodically three-dimensional, in particular, with constant heights; between the IO means of reflection, covering the area of nodal point of path axes of the reflecting IO sub-system, and performed being selected among the series comprising as follows: electrode-connected two-element 10 block of refraction with curved axis, i. e., integrated 10 block of refraction comprising two electrode-connected IO elements of refraction; electrode-connected four element 10 block of refraction with curved axis, i. e., two integrated IO block of refraction, which each comprises two electrode-connected IO elements of refraction, performed symmetrical to the nodal point;

- its extra IO means of refraction is located off the field in a drift space;
- its extra IO means of refraction with curved axis is included in the incrementally reflecting 10 sub-system wherein the types of scanning such as $d_{NUs}$, $d_{\mho Us}$ $d_{\sum Us}$, $d_{\Re \kappa Us}$, $d_{IM}$, $d_{CM}$, $d_{\wedge M}$, $d_{\Re 4 Ms}$, $d_{\Re 4 Ms}$ are selected among the series comprising harmonically with external refracting transition $h\perp$, loop-shaped harmonically with external refracting transition $h\rho\perp$, arc-wise harmonically with external refracting transition $h\overline{\omega}\perp$; in planar reflecting IO sub-system y, wherein types scanning $d_{NUp}$, $d_{\mho Up}$ $d_{\sum Up}$, $d_{\Re \kappa Up}$, $j_{\Re 4 Mp}$ are selected among the series comprising plane-reflecting transitions: with external refracting transition $p\perp$, with angled and external refracting transition $p\nu\perp$, with loop-shaped and external refracting transition $p\rho\perp$, with arc-wise and external refracting transition $p\overline{\omega}\perp$;
- its IO means of refraction with curved axis is performed covering additionally, at least, on one side of reflecting IO sub-system over its vertical plane, an area to passing the ions flux and it is performed with option to be used, at least, in one modes of introducing ions flux into reflecting IO sub-system and to remove the ions flux from the reflecting IO sub-system;
- at least, one of its 10 means of reflection is performed with option to be used in two and more modes of applying electric potentials to introducing ions flux into an IO sub-system and to removing the ions flux from it;
- Additionally it comprises, at least, on one side of its entry and exit to introduce the ions flux into reflecting 10 sub-system and to remove the ions flux from it, respectively, an extra IO means selected among the series comprising local and extended IO means of reflection, IO means of refraction with straight axis, IO means of refraction with curved axis to provide the external refracting transition;
- its extra IO means is performed being selected among the series comprising multifunctional 10 blocks and elements, and performed with option of, at least, two modes of operation among the group, comprising the 10 means of reflection, 10 means of refraction with curved axis, and field-less mode.

To implement the claimed method of mass-spectrometry we propose a mass-spectrometer (MS), comprising:

(i) MS-blocks including: an ionic source block; a group of ion conducting blocks, comprising a block-structured docking group, and an analyzing-dispersing block, wherein the said blocks comprise IB-channels with boundary surfaces and IO channel subsystems, comprising:

- IB channel, adequate to its block, is a part of an MS-channel which integrates ion-conducting IB channels of ion-conducting blocks jointly with an ionic source IB channel of an ionic source unit;
- channel IO sub-system, adequate to its IB channel, is a part of the IO system of the MS-channel, which integrates the IO systems of ion-conducting IB channels jointly with the IO system of ionic source IB channel;
- ion-conducting IB channels comprise, at least, two boundary surfaces, assigned being selected among the series comprising types of surfaces such as a conditionally assigned surface, surface, coinciding with a boundary electrode of a channel 10 sub-system, any one of them is performed, at least, with one exit gate (to passing the channel ions flux), as consisted with selected boundary surface;
- IO sub-system of, at least, one ion-conducting IB-channel is performed being selected among the series comprising such its types as linear, curvilinear, curvilinear with cross-space mass dispersing and reflecting IO sub-system;

(ii) detector system;
(iii) controller-computer system.

Main feature distinguishing this proposed MS from the known MSs consists in that it is performed comprising, at least, one characteristic feature, selected among the group comprising the following:

(a) an ionic source block performed, at least, with two exit gates, and an MS performed with option to carry out concurrently a mass-spectrometry of, at least, two ions flux paths, among them ions paths with multiply connected surfaces of cross-sections, wherein the ion flux is injected by an ionic source unit;

(b) a reflecting IO sub-system performed three-dimensional (3*D*-reflector) and comprising, at least, two 10 means of reflection, plurality of averaged front vectors which are not located on one straight line and are performed, at least, in one type, selected among the series comprising doubly reflecting blocks of arc-wise $\bar{\omega}$-type and loop-shaped $\rho$-type as well as an angled reflecting IO element of $\nu$-type, and 3*D*-reflector is used for time-of-flight dispersion by ion masses, transverse space focusing, time-of-flight focusing by ions energy in the ion packets;

(c) at least, one 10 element selected among the series comprising the following: extended and local transversely discontinuous conic reflecting IO elements, among them single-zonal, two-zonal: vertical-two-zonal, horizontal-two-zonal, and their mixed two-zonal types; local transversely discontinuous conic IO refracting elements; IO elements of reflection with three-dimensional area of reflection, among them transversely discontinuous conic IO elements of reflection; extended refracting IO elements, among them transversely discontinuous conic IO elements.

Other features distinguishing this proposed MS from the known MSs consist in the following:

- at least, one its ion-conducting MS-block comprises, at least, one IB channel, selected among the series comprising such its types as channel single-path and channel-multipath;
- at least, one its MS-channel is performed with option to be used, at least, in one of mass-spectrometry modes as follows: single-stage type, *MS*/*MS*-type, *MS*⟨*n*⟩-type, combinations of liquid chromatographs with mass-spectrometers *LC*/*MS*, and sequential increments in ions flux transferring pursuant to a version selected among the group of operation modes as follows:

    - pursuant to first version of extended multi-modular operation mode wherein the MS is performed as an extended block-multiplex device;
    - pursuant to second version of extended multi-modular operation mode wherein the MS is performed as an extended block-multiplex device;
    - pursuant to version of multi-modular operation mode, by-passing the IB channels of further ions accumulation wherein an extended multi-modular MS is provided, inclusive of failing IB channel of further ions accumulation in the MS structure;
    - pursuant to version of mean modularity level operation mode without of ions trapping, by-passing the IB channel of further ions accumulation and IB channel of ions trapping wherein an extended multi-modular MS is provided, inclusive of failing IB channel of further ions accumulation and IB channel of ions trapping in the MS structure;
    - pursuant to version of mean modularity level of operation mode with failing ions refinement, by-passing the IB channel of further ions accumulation and IB channel of the refinement cell wherein an extended multi-modular MS is provided, inclusive of failing IB channel of further ions accumulation and IB channel of the refinement cell in the MS structure;
    - pursuant to version of small-modular operation mode, by-passing the IB channel of further ions accumulation, IB channel of ions trapping and IB channel of the refinement cell wherein an extended multi-modular MS is provided, inclusive of failing IB channel of further ions accumulation, IB channel of ions trapping and IB channel of the refinement cell in the MS structure;

- at least, one ion-conducting MS-block comprises, at least, one electrode-connected assembly of two IB channels, selected among the series comprising its types and including, at least, two types selected among the group as follows: with a four-vertex *PLR*-sub-system, with a three-vertex *PLR*-sub-system, with a double-vertex *PLR*-sub-system, with a single-syllable reflecting IO sub-system $\Gamma_D(1, \hat{f}) j_{\Gamma D}$;
- its block-structured docking group comprises a pre-shaping block, which comprises, at least, one pre-shaping IB channel, performed with option of interim pre-shaping, to accelerate and guide the ions flux, wherein the said pre-shaping IB channel comprises, at least, one unit set, selected among the series comprising: an ion pre-trap; a drift tube of asymmetrical cell of ion mobility DC/field (cells of ion mobility) with entry and exit gates (ports) with ions gate valves; refracting elements and a diaphragm-aperture;
- its ionic source block comprises, at least, one ionic source IB channel, performed with option to be used in one of modes, selected among the series comprising continuous ions flux generation and pulse ions flux generation;
- at least, one ions detector of detecting group is provided with ions separator of certain transmission band and comprises, at least, one of series terms comprising control grids, logical Bradbury-Nielsen terms, a plane-parallel deflector (condenser);
- each its ions detector is mainly connected to the system of data acquisition and data-storage provided with analog-to-digital converter (adaptive data compression protocol);

- at least one ion detector is configured within an extended dynamic range.
- its ion detector is configured to allow extension of dynamic ranges of the said MS through alternative scanning associated with varied intensity of voltage of at least one pulsating ionic source in the said distributing-accelerating IB-channel;
- its ion detector is configured to extend a dynamic range of the said MS through alternative scanning by varying durations of ion injections into an output gate of the said ion source;
- its ion detector is configured to allow an automatic gain control;
- its ion pre-trap is configured to comprises, at least, one IB channel of ions pre-trap selected among the series consisting of: a quadrupole IB channel, an ion pre-trap, a static IB channel, e.g., provided that the channel IO sub-system of its IB channel is performed with curved main axis in transverse space dispersing mode; an IB channel, inclusive of a TOF IB channel performed in one of its mentioned modes, but not limited to;
- its dispersing analyzer block comprises, at least, one dispersing analyzer IB channel, selected among the series comprising: toroidal and cylindrical sectoral electric analyzers; a sectoral magnetic analyzer; an orbitrap analyzer; a Fourier-analyzer ICR; a static analyzer, e.g., wherein a channel IO sub-system of its IB channel is performed with curved main axis of transverse-space dispersing type; an IB channel, inclusive of a TOF IB channel performed in one of said modes, but not limited to;
- moreover it comprises, at least, on one side; behind a dispersing analyzer of its IB channel; ahead of it; a detecting group (detecting group in a dispersing analyzer IB channel);
- at least, one of selected dispersing analyzer IB channels and IB channels of ions pre-trapping comprises means of adjusting a path length and a voltage of ion acceleration;
- its analyzing-dispersing IB-channel is configured to allow an ion path length less than a value for said IB-channel of ion trapping, e.g., to setting voltage of ions acceleration larger than in the IB channel of ions trapping;
- its MS-channel is configured to allow an ion time-of-flight through the said IB-channel of ion trapping to be at least three times as large as ion time-of-flight through the said analyzing-dispersing IB-channel to perform time-of-flight mass-spectrometry, selected from the group consisting of $MS\langle n\rangle$-type and $MS/MS$-type, by means of embedded time method;
- it comprises a system of data transmission and processing which supports a parallel reception of daughter fragments spectra without mixing ions spectra which are initial material;
- it comprises, at least, two parallel MS-channels, one of them is performed with option to perform a mass spectroscopy of the solids, while one other is configured to allow a mass spectroscopy of organic matters;
- it is configured in a block-structured mode integrated, at least, according to one of modularity level versions;
- its base supporting structures, blocks and peripheral devices are configured in standard structural blocks allowing an authorized access aimed at maintenance operations, functional power up-dating or reconfiguration of the said MS as well as its hardware peripherals;
- it is performed with quick-coupled interface nodes, comprised in configuration of the said MS equipment and its hardware peripherals;
- it is performed with option to be mounted, at least, with one peripheral device, selected among the series comprising devices of: data input, data conversion, data communications and data reproduction depending on requirements to transferred data as well as to devices of data reproduction;
- its devices of data input, data conversion, data communications and data reproduction are interconnected, at least, by means of one mode, selected among the series comprising electrical communications and wireless communications.

This invention may be implemented in many versions, so only certain preferred embodiments are described by means of examples given in supporting drawings.

We emphasize that the axial front vector *n* is a part of symbol of IO element, so, unless necessary, here and in figures where the symbol of IO element is represented as a constituent of the IO system, any individual reference to the axial front vector *n* of the *n* IO means will not be provided in text.

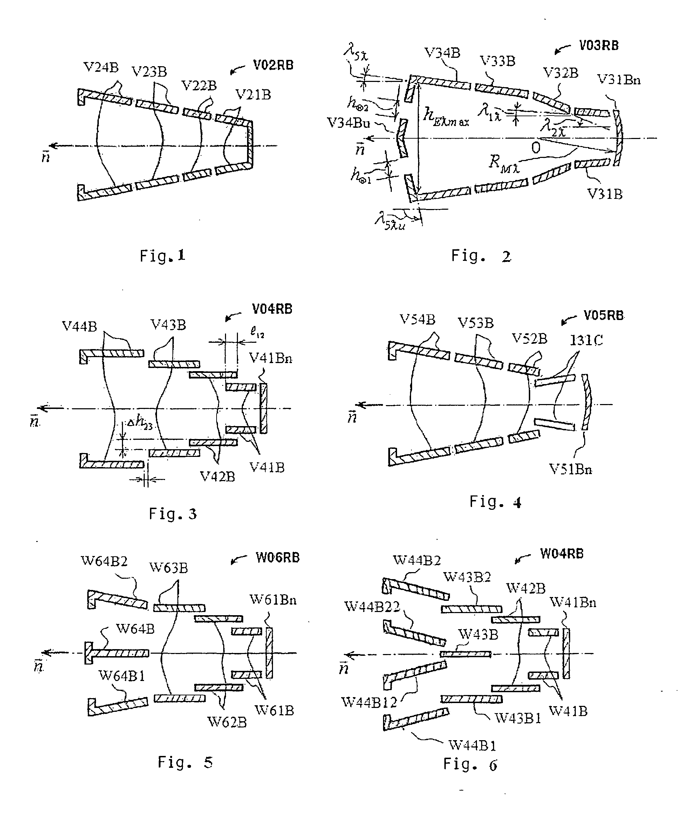

Figs. 1-8 schematically illustrate longwise-conic IO elements of reflection, performed with a longwise-vertical extension consisting, at least, in one extension, at least, in one at average direction of longwise vertical section. Wherein elements are shown as follows:

- with closures arranged crosswise to main axis of IO elements from the side of ions reflection, in principle, any one of them may be performed without closure;

- Figs. 1, 2, 3, 4, 5, 6 and 8 represent IO elements selected among the series comprising elements with straight axis of symmetry, doubly symmetric elements, two-dimensional elements;

- Fig. 1 represents a longwise-conic IO element of reflection, performed with longwise-vertical extension of varying dimensional type having an uniform height;

- Figs. 2-8 represent longwise-conic IO elements of reflection, performed with longwise-vertical extensions of varying dimensional types as follows:

Fig. 1 represents a single-zone longwise-conic reflecting IO element V02RB, which comprises: a first electrode of reflection V21B with a closure of planar configuration, a vertical-limiting electrode 91 Cn with constituting elements 91C and 91 C2, a second electrode of reflection V22B, a third electrode of reflection V23B, a fourth electrode of reflection V24B.

Fig. 2 represents a single-zone longwise-conic reflecting 10 element V03RB of corner ramping transition, comprising: a closure V031 Bn, configured with curvature, at least, in one direction and arranged crosswise to main axis of IO element, first reflecting electrode V31 B, second reflecting electrode V32B, third reflecting electrode V33B, fourth reflecting electrode V34B. Wherein electrodes V31B and V32B are arranged at the angle of value

$$\Hat{\lambda}_{2\lambda} - \Hat{\lambda}_{1\lambda}$$ relative to each other, and electrodes V32B and V33B are arranged at the angle of non-zero value relative to each other.

Fig. 3 represents a single-zone longwise-conic reflecting IO element V04RB of parallel-stepwise transition, comprising: a flat closure V041Bn, first reflecting electrode V41B, second reflecting electrode V42B, third reflecting electrode V43B, and fourth reflecting electrode V44B.

Fig. 4 represents a single-zone longwise-conic reflecting IO element V05RB ramping stepwise transition of first type, comprising: a closure V051Bn" first reflecting electrode V51 B, second reflecting electrode V52B, third reflecting electrode V53B, fourth reflecting electrode V54B, wherein electrodes V51 B and V52B are arranged at an angle and stepwise relatively to each other.

Fig. 5 represents a double-zone electrode-connected longwise-conic reflecting IO element V06RB of ramping stepwise transition of second type, comprising: a flat closure W061 Bn, first reflecting electrode W61 B, second reflecting electrode W62B, third reflecting electrode W63B, two electrode-connected electrodes W64B1, W64B and W64B2, W64B of two zones having a common segment W64B, wherein electrode W64B is arranged at an angle relatively to electrode W63B, all other electrodes are arranged in parallel to their common axis and stepwise relative to each other.

Fig. 6 represents a double-zone electrode-connected longwise-conic reflecting IO element W04RB of ramping stepwise transition of third type, comprising: a closure W41 Bn, first reflecting electrode W41 B, second reflecting electrode W42B, two electrode-connected electrodes W43B1, W43B and W43B2, W43B of two zones with a common segment W43B, and two fourth electrodes W44B1, W44B12and W44B2, W44B22, wherein electrodes W44B1, W44B12 and W44B2, W44B22 of two zones are arranged at an angle stepwise relatively to other electrodes while all other electrodes are arranged in parallel to their common axis and relative to each other, stepwise relative to each other.

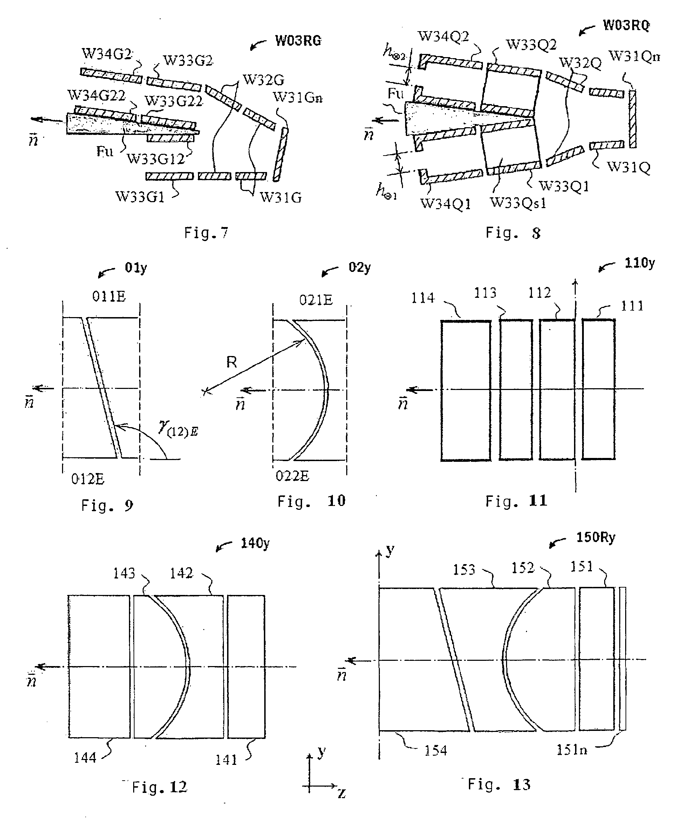

Fig. 7 represents a non-symmetrically double-zoned longwise-conic reflecting IO element W03RG of a corner ramping transition, comprising: a closure W31Gn, first reflecting electrode W31G, second reflecting electrode W32G, two third electrodes W34G1, W34G12 and W34G2, W34G22 and one fourth electrode W44G2 of an upper zone W44G22.

Fig. 8 represents a symmetrically double-zoned longwise-conic reflecting IO element W03RQ of corner ramping transition, comprising: a closure W31 Qn, first reflecting electrode W31Q, second reflecting electrode W32Q, two third boxlike electrodes W34Q1, W34Q12 and W34Q2, W34Q22, two fourth electrodes W44Q1, W44Q12 and W44Q2, W44Q22.

Figs. 9-15, represent versions of local IO elements in projections to a horizontal plane of an IO element.

Fig. 9-10, represent versions of inter-electrode limits configurations selected among the series comprising: a straight line 01$y$ and a segment of second-order curve 02$y$, forming a sectoral trans-bending IO element with sectoral trans-bending field distribution. At that, a value of slope angle $\gamma_{(12)E}$ between two electrodes 012E and 011E is constrained within the range $\dfrac{\pi}{4} \leq \gamma_{(12)E} \leq \dfrac{3\pi}{4}$, a segment of second-order curve, formed between electrodes 022E and 021 E, by its convex side it may be facing sideways or right-about from an averaged front vector *n*.

Fig. 11 shows a Cartesian-two-dimensional IO element 110y comprising: constituting elements of first electrode 111 and second electrode 112, third electrode 113 and fourth electrode 114. Wherein an inter-electrode split between constituting elements is configured in straight lines and vertically to a longitudinal-vertical plane of an IO element.

Fig. 12 shows a trans-bending IO element 140y with an averaged front vector *n* comprising: constituting elements of first electrode 141 and second electrode 142, third electrode 143 and fourth electrode 144. Wherein an inter-electrode split between constituting elements of second electrode 142 and third electrode 143 is configured as a segment of second-order curve, by its convex side facing right-about from direction of averaged front vector *n*. Other inter-electrode splits are configured in straight lines and vertically to a longitudinal-vertical plane of an IO element.

Fig. 13 shows a trans-bending IO element of reflection 150y with averaged front vector *n*, comprising: a flat closure 151 Rn, constituting elements of first electrode 151 and second electrode 152, third electrode 153 and fourth electrode 154. Wherein an inter-electrode split between constituting elements of second electrode 152 and third electrode 153 is configured in a segment of second-order curve, by its convex side facing from the side of closure 151n. Inter-electrode split between constituting elements of third electrode 153 and fourth electrode 154 is configured in straight lines and at an angle relatively to a longwise-vertical plane of an IO element. Other inter-electrode splits are configured in straight lines and vertically to a longitudinal-vertical plane of an IO element.

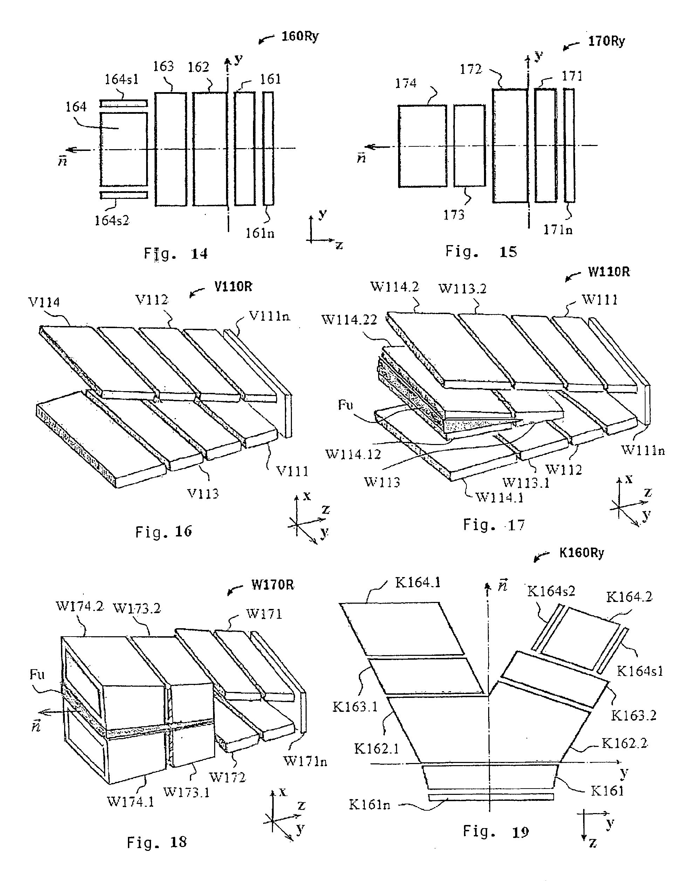

Fig. 14 represents crossed-mixed reflecting P-element 160Ry comprising: a flat closure 161 Rn, constituting elements of first electrode 161and second electrode 162, third electrode 163; a horizontal constituting element 164 and lateral constituting elements 164s1 and 164s2 of fourth electrode. Wherein inter-electrode splits are configured in straight lines and vertically to a longitudinal-vertical plane of an IO element.

Fig. 15 represents a boxlike-mixed P-element of reflection 170Ry comprising: a flat closure 171 Rn, constituting elements of first electrode 171 and second electrode 172; third boxlike electrode 173; fourth boxlike electrode 174. Wherein inter-electrode splits are configured in straight lines and vertically to a longitudinal-vertical plane of an IO element.

Fig. 16 shows a three-dimensional view of a Cartesian-two-dimensional longwise-conic single-zone IO element of reflection V110R, comprising as follows: a closure V111n; constituting elements of first electrode V111 and second electrode V112, third electrode V113 and fourth electrode V114. Wherein inter-electrode split between constituting elements is configured in straight lines and vertically to a longitudinal-vertical plane of an IO element. Working (internal) electrodes surfaces of an element of reflection are performed with one slope, i.e., upper constituting elements of all electrodes are performed at an identical angle relatively to a mean surface of a Cartesian two-dimensional IO element V110R.

Fig. 17 shows a three-dimensional view of a Cartesian two-dimensional uniformly longwise-conic double-zone IO element of reflection W110R, comprising as follows: a closure W111n, constituting elements of first W111and second W112; two electrode-connected third electrodes W113.1, W113.12 and W113.2, W113.22 of two zones with a common segment W113, and two fourth electrodes W114.1, W114.12 and W114.2, W114.22 of two zones.

Fig. 18 represents a three-dimensional view of a boxlike-mixed longwise-conic double-zone reflecting IO element W170R comprising: a flat closure W171Rn, constituting elements of first electrode W171 and second electrode W172; third boxlike electrodes W173.1 and W173.2 of two zones; fourth boxlike electrodes W174.1 and W174.2 of two zones. Wherein inter-electrode splits are configured in straight lines and vertically to a vertical plane of an IO element.

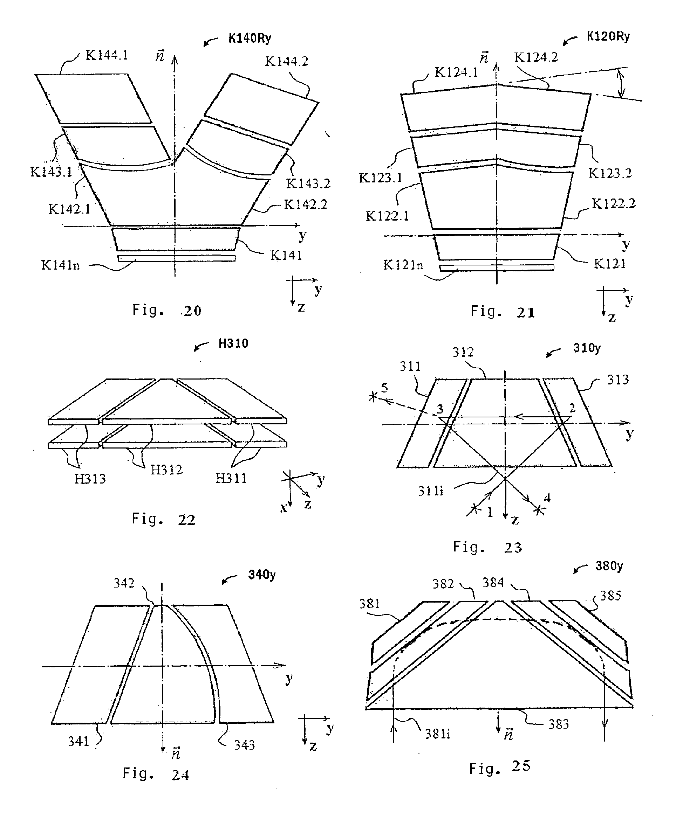

Figs. 19, 20 and 21 represent, in projections to a horizontal plane *yz* of an IO element, examples illustrating implementation of horizontal double-zone local IO elements of reflection. To minimize the scope of drawing works, examples are shown only for local P-elements of reflection wherein, in the whole, examples of increments in configurations of horizontal double-zone local P-elements of reflection are based on specified areas of zones branching. In this regard figures 19 and 20 represent examples of electrode-uncoupled IO elements of reflection; meanwhile figure 21 illustrates an example of incrementing in an electrode-connected IO element of reflection.

Fig. 19 shows an IO element of reflection K160Ry with averaged front vector *n*, comprising: a flat closure K161 Rn, constituting elements of first electrode K161; second electrodes K162.1 and K162.2 of two zones; third electrodes K163.1 and K163.2 of two zones; fourth electrodes K164.1 of one zone and a horizontal constituting element K164.2 as well as a lateral constituting elements K164s1 and K164s2; fourth electrode of one other zone. Wherein inter-electrode splits are configured in straight lines and vertically to a longwise-vertical plane of an IO element.

Fig. 20 shows a P-element of reflection K140Ry with an averaged front vector *n*, comprising: a flat closure K141Rn, constituting elements of first electrode K141; second electrodes K142.1 and K142.2 of two zones; third electrodes K143.1and K143.2 of two zones, fourth electrodes K144.1 and K144.2 of two zones. Wherein inter-electrode splits between second electrode K142.1 and K142.2 of two zones, on the one part, and third electrodes K143.1and K143.2 of two zones, on the other part, are configured as segments of second-order curves by their convex side facing in direction of closure K141Rn. Other inter-electrode splits are configured in straight lines and vertically to a longwise-vertical plane of an IO element.

Fig. 21 shows an IO element of reflection K120Ry with averaged front vector *n*, comprising: a flat closure K121Rn, constituting elements of first electrode K121; second electrodes K122.1 and K122.2 of two zones; third electrodes K123.1 and K123.2 of two zones, fourth electrodes K122.1and K122.2 of two zones. Wherein inter-electrode split between second electrode K122.2 and third electrode K123.2 is configured as a segment of second-order curve by their convex side facing in direction of closure K121Rn. Other inter-electrode splits are configured in straight lines and vertically to a longwise-vertical plane an IO element.

Figs. 22-25 represent examples of implementation of arc-wise reflecting elements of $\bar{\omega}$-type and loop-shaped reflecting elements of $\rho$-type of local two-reflecting IO block. Wherein figures 23-25 represent them in projections to a horizontal plane of two reflecting IO block.

Fig. 22 shows a three-dimensional view of arc-wise reflecting element H310 of two reflecting IO block, wherein spacing gaps between a first electrode H311 and second electrode H311, as well as between a second electrode H31 and third electrode H313 are configured in straight-lined fine splits.

Fig. 24 represents a non-symmetrical two-reflecting IO block 340y, wherein spacing gaps between a first electrode 341 and second electrode 342, as well as between a second electrode 372 are configured in straight-lined fine splits, while a spacing gap between a second electrode 342 and third electrode 343 is configured as a second-order curve.

Figs. 23 and 25 represent principles of implementing, respectively, a loop-shaped reflecting element of $\rho$-type and arc-wise reflecting element of $\bar{\omega}$-type in a two-reflecting block. As shown in Fig. 23, a characteristic trajectory of ions movement 311i in a two-reflecting IO block 310y passes through points 1, 2, 3 and 4 when using a two-reflecting IO block in mode of loop-shaped reflection of $\rho$-type. When using a two-reflecting IO block in mode of reflection of first electrode 311 and second electrode 312, while a second electrode 312 and a third electrode 313 are used in mode of refraction, characteristic trajectory of ions movement 311i in a two-reflecting IO block 310y passes through points 1, 2, 3 and 5. As shown in Fig. 25, when using a two reflecting IO block in mode of reflection of $\bar{\omega}$-type, a characteristic trajectory of ions movement 381i in a two-reflecting IO block 380y passes in parallel with averaged frontal vector *n*.

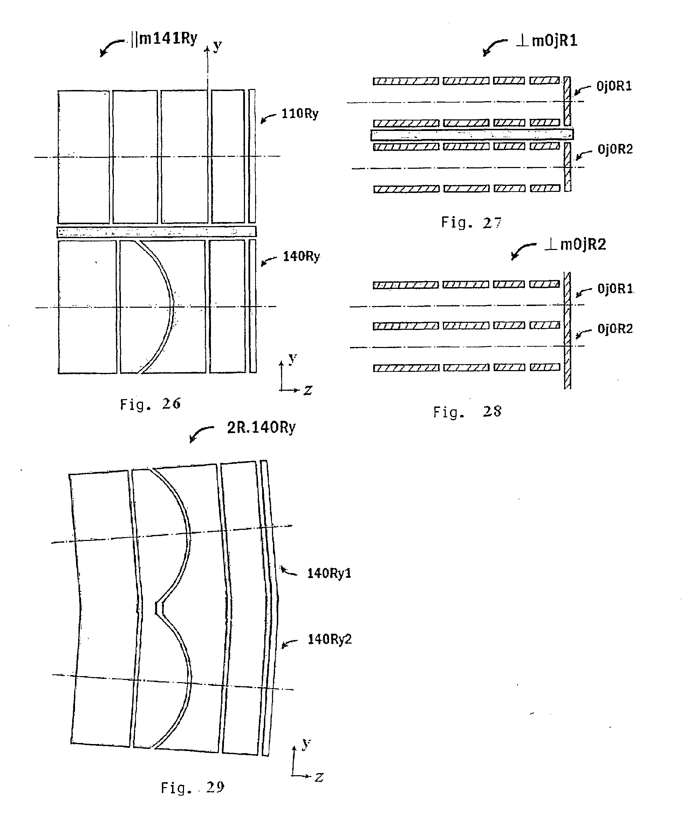

Fig. 26 shows, in projection on a mean plane (*yz* projection), a non-uniform type (comprising, at least, mirrors of two different types) of electrode- discrete extended reflecting IO element ‖m141Ry, as an extended horizontal massive of reflecting IO elements. Wherein, an extended IO element ‖m141Ry of reflection comprises two IO elements of reflection 110Ry and 140Ry.

Figs. 27 and 28 represent, in projection on a longwise-vertical plane (*xz* projection), extended IO elements of reflection; electrode-discrete element ⊥m0j1R and electrode-connected element ⊥m0j2R as an extended vertical massive of reflecting IO elements. Wherein, each of them comprises two IO elements of reflection 0j0R1 and 0j0R2.

Figure 29 shows, in projection on a mean plane, a special electrode-connected IO block 2R.140Ry, comprising two local 10 elements of reflection 141Ry1 and 141Ry2.

Examples in figures 26-29 provide guidance on the concept of extended horizontal and vertical, uniform and non-uniform extended massive of reflecting 10 elements. In a general way, number of reflecting IO elements in a massive, and selection of any reflecting IO element in a massive depend on practical task of mass spectroscopy to be solved. Selection of any reflecting IO element in a massive may be performed among the series comprising different configurations of above described reflecting IO elements.

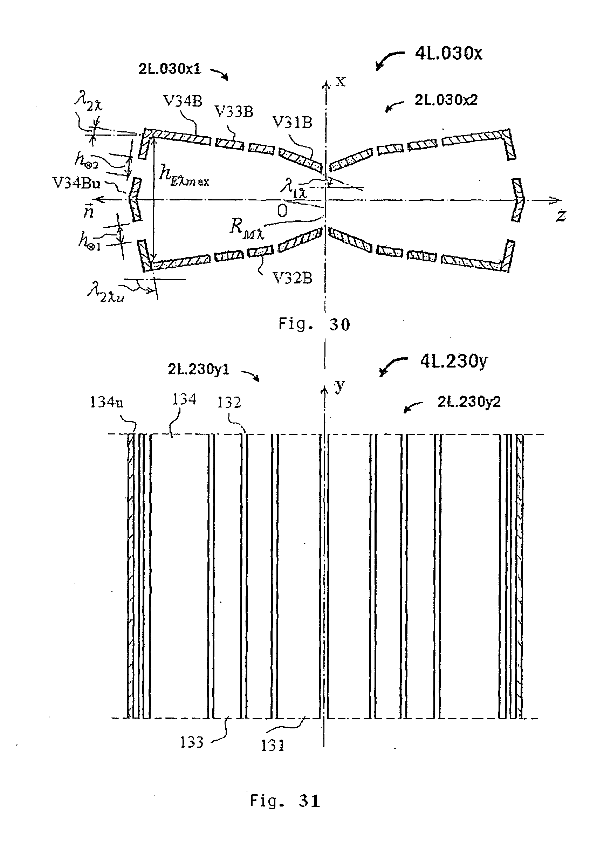

Figs. 30 and 31 show, in projections $xz$ and $yz$ respectively, special types of refracting IO means with curved axis 4L.230, constituted of two integrated IO blocks of refraction 4L.230, which each comprises two electrode-connected local IO elements of refraction performed symmetrically to a nodal point. The said blocks may be used, e.g., to implement an external refracting transition within a nodal point area of path axes in a four-vertex *PLR*-sub-system.

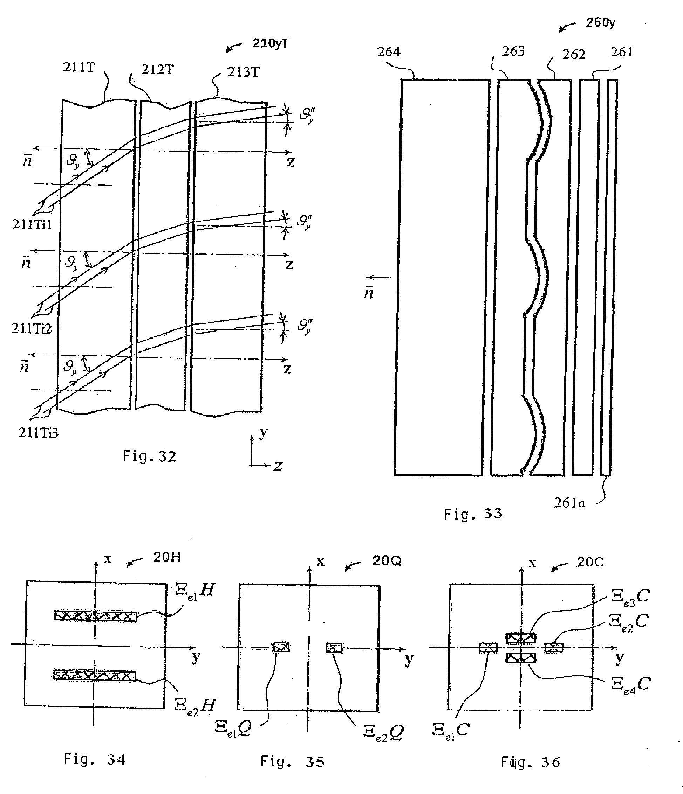

Fig. 32 shows in projection on an increments plane, combined with an yz plane, a Cartesian two-dimensional segment 210yT of extended IO means of refraction with curved axis and with segments of first electrode 211T, second electrode 212T and third electrode 213T; characteristic ions trajectories 211Ti1, 211Ti2 and 211Ti3 in a segment 210yT in its telescopic operation mode; angles of ions flux incidence $\vartheta_y$ and angles of ions flux refraction $\vartheta''_y$.

Fig. 33 represents, in projection on the increments plane, combined with a coordinate plane *yz*, a trans-bending straight lined alternating extended reflecting IO means 260y, comprising: a vertical-limiting electrode 261 n; first electrode 261 and second electrode 262 of reflection; third electrode 263 and fourth electrode 264. Inter-electrode split between constituting elements of second electrode 262 and third electrode 263 is configured as periodically recurring combination, comprising straight line segment of second-order curve. Other inter-electrode splits are configured in straight lines and vertically to mean and vertical planes of linear reflecting IO means 260y.

Figs. 34, 35 and 36 represent boundary surfaces 20H, 20Q and 20C, respectively.

Fig. 34 shows a boundary surface 20H, comprising boundary sections of a multipath channel ions flux, of types: $\Xi_{e1'H}$ and $\Xi_{e2'H}$, which are arranged along a line of longitudinal-vertical plane.

Fig. 35 shows a boundary surface 20Q, comprising boundary sections of a multipath channel ions flux, of types: $\Xi_{e1'Q}$ and $\Xi_{e2'Q}$, which are arranged along a line of horizontal plane.

Fig. 36 shows a boundary surface 20C, comprising boundary sections of a multipath channel ions flux, of types: $\Xi_{e1'C}$, $\Xi_{e2'C}$, $\Xi_{e3'C}$ and $\Xi_{e4'C}$, distributed along a line of a longitudinal-vertical plane and along a line of a horizontal plane.

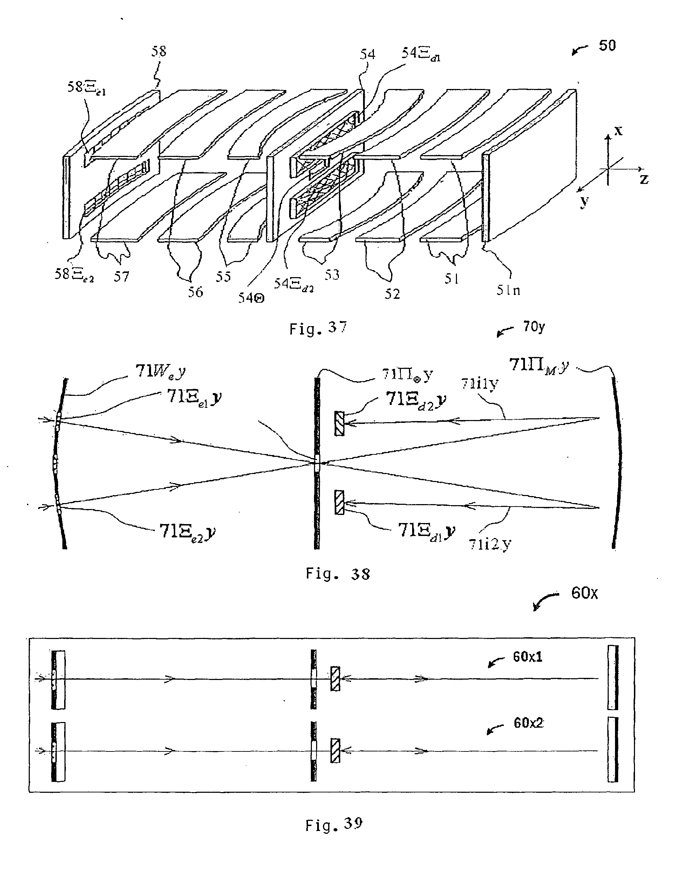

Figs. 37, 38 and 39 schematically represent examples of selection of doubly symmetric IB channel with a straight-line main axis having boundary sections of two-path channel ions flux.

Fig. 37 shows a space view of doubly symmetric IB channel 50, comprising: a closure 51n, in conjunction with electrodes 51, 52, 53 and with facing them surface of diaphragm-electrode 54; forming a local reflecting IO element; electrodes 55, 56, 57, in conjunction with an entry surface-electrode 58 and with facing them surface of diaphragm-electrode 54, forming a local refracting IO element. Wherein a diaphragm-electrode 54 is configured with a diaphragm 54Θ at its center; first exit gate $54\Xi_{d1}$; second port gate $54\Xi_{d2}$. Entry surface-electrode is configured with first exit gate $58\Xi_{e1}$ and second exit gate $58\Xi_{e2}$.

Fig. 38 represents, in projection on a horizontal plane, in conjunction with coordinate plane *yz*, a projection of two characteristic ions trajectories 71*i*1*y* and 71*i*2*y* in a similar doubly symmetric IB channel 50.

Fig. 39 shows, in projection on a longwise-vertical plane, two IB channels 60x1 and 60x2, which may be performed as electrode-connected.

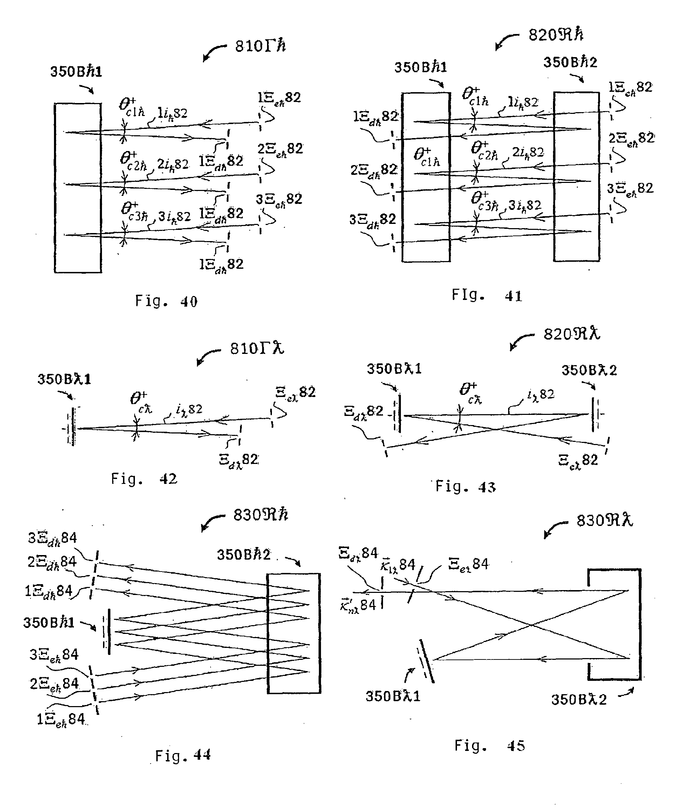

Figs. 40-46 represent versions of IB channel configurations, among them multipath configurations, based on a single-syllable reflection by characteristic averaged ions trajectories.

Figs. 40-46 show versions to perform incrementally reflecting IB channels, even though they may be performed as planar reflecting IB channels.

Figs. 40 and 42 show, in projections on the $\hbar$-plane (increments plane) 810Γ$\hbar$ and to the base plane 810Γ$\check{\Lambda}$, respectively, a three-path IB channel with single-syllable single-reflecting IO sub-system $\Gamma_D(1,f)j_{\Gamma D}$ at $j_{\Gamma D}$=3.

Figs. 41 and 43 show, in projections on the $\hbar$-plane $820\mathfrak{R}\hbar$ and on the base plane $820\mathfrak{R}\check{\Lambda}$, respectively, a three-path IB channel with single-syllable double-vertex $PLR$-sub-system

$$\mathfrak{R}_{2U(ps)}(2,f)j_{\mathfrak{R}2U(ps)} = \mathfrak{R}_{2Us}(2,v)h3 \, .$$

Figs. 44 and 45 show, in projections on the $\hbar$-plane (increments plane) $830\mathfrak{R}\hbar$ and on the base plane $830\mathfrak{R}\check{\Lambda}$, respectively, a three-path IB channel with single-syllable three-vertex $PLR$-sub-system

$$\mathfrak{R}_{3U(ps)}(3,f)j_{\mathfrak{R}3U(ps)} = \mathfrak{R}_{3Us}(3,v)h3 \, .$$

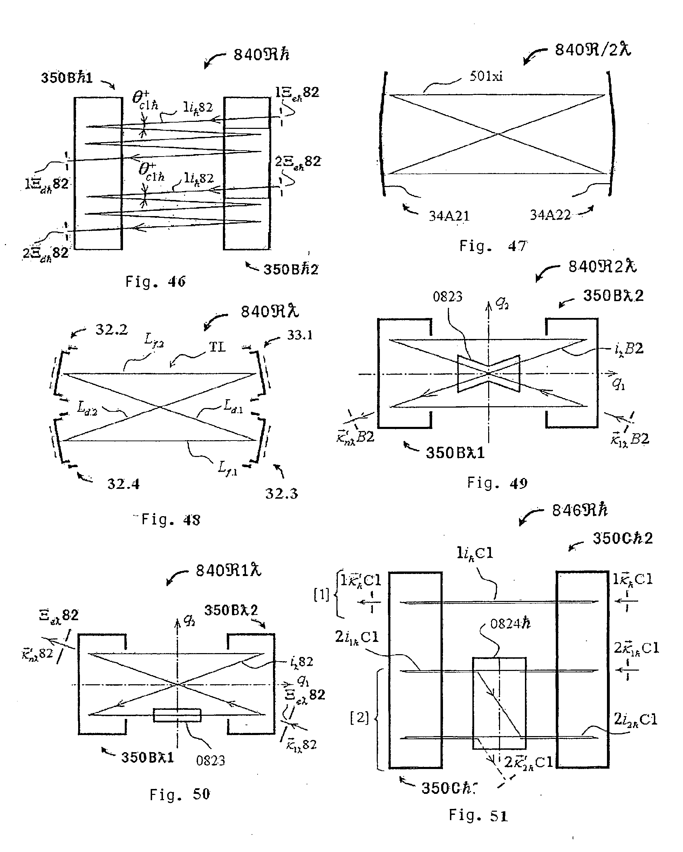

Fig. 46 shows, in projections on the $\hbar$-plane $840\mathfrak{R}\hbar$, a two-path IB channel with a single-syllable four-vertex $PLR$-sub-system $\mathfrak{R}_{4U(ps)}(4,f)j_{\mathfrak{R}4U(ps)} = \mathfrak{R}_{4Us}(4,f)h2$.

Figs. 47-50 represent, in projections on the base plane, versions of IB channels performed with four-vertex $PLR$-sub-systems. Fig. 47 shows an IB channel version configured with a single-syllable four-vertex $PLR$-sub-system based on two special reflecting IO means 34A21 and 34A22.

Fig. 48 shows an IB channel version configured with a four-vertex $PLR$-sub-system based on four extended reflecting IO means 32.1, 32.2, 32.3 and 32.4. Fig. 48 shows also a $\check{\Lambda}$-characteristic line $TL$ of four-vertex $PLR$-sub-system and its constituting elements: leading frontal line $L_{f1}$ and rear frontal line $L_{f2}$, first diagonal line $L_{d1}$ and second frontal line $L_{d2}$.

Figs. 49 and 50 show an IB channel version configured with a four-vertex $PLR$-sub-system based on any IO reflecting means with additionally integrated IO means of refraction.

Fig. 49 shows an IB channel version configured with an electrode-connected four-elements refracting 10 block with curved axis 0821.

Fig. 50 shows an IB channel version configured with a Cartesian two-dimensional extended refracting 10 means with curved axis 0823, confining a frontal area of $PLR$-sub-system.

Fig. 51 shows a version of electrode-connected integration of two IB channels $846\mathfrak{R}\hbar$ with single-path four-vertex $PLR$-sub-system of single-syllable planar reflecting

$$\mathfrak{R}_{\kappa Up}(\kappa,f)d_{\mathfrak{R}\kappa Up}j_{\mathfrak{R}\kappa Up} = \mathfrak{R}_{4Up}(4,v)p1 \quad [1]$$ and multi-syllable planar reflecting

$$\mathfrak{R}_{4M(ps)}(4,f)d_{\mathfrak{R}4M(ps)}j_{\mathfrak{R}4M(ps)} = \mathfrak{R}_{4Mp}(4,v)p\perp 1 \quad [2] \, .$$ Multi-syllable planar reflecting

$\mathfrak{R}_{4Mp}(4,v)p\perp 1$ [2] comprises refracting 10 means with curved axis 0824$\hbar$ to implement an external refracting transition $p\perp$.

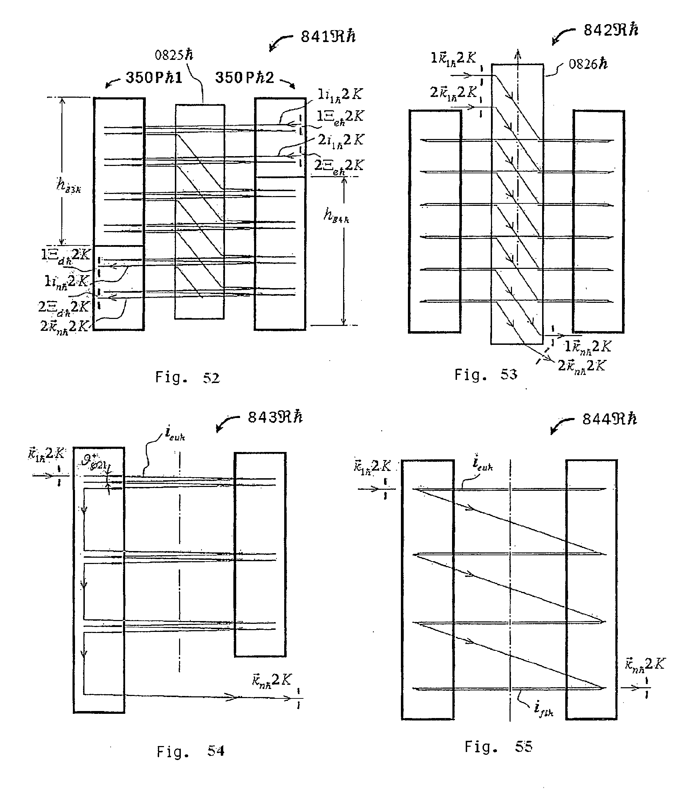

Figs. 52-55 represent versions of IB channels configured with multi-syllable four-vertex $PLR$-sub-system

$$PLR\text{-sub-system}\ \mathfrak{R}_{4M(ps)}(4,f)d_{\mathfrak{R}4M(ps)}j_{\mathfrak{R}4M(ps)} \, .$$

Fig. 52 shows a version of IB channel configured with a two-path incrementally reflecting $PLR$-sub-system $\mathfrak{R}_{4Ms}(4,v)h\perp 2$ with refracting IO means with curved axis 0825$\hbar$ which comprises harmonically scanning with an external refracting transition $h\perp$.

Fig. 53 shows a version of an IB channel configured with a single-path multi-syllable planar reflecting $PLR$-sub-system $\mathfrak{R}_{4Mp}(4,v)p\perp 1$ with refracting IO means with curved axis 0826$\hbar$ which comprises a single-planar scanning mode through an external refracting transition $p\perp$. Wherein the said refracting IO means with curved axis 0826$\hbar$,

contrary to an IO means of refraction with curved axis 0825$\hbar$, performed more extended, additionally allows to inject an ions flux into reflecting IO sub-system and to remove the ions flux from reflecting 10 sub-system.

Fig. 54 shows a version of an IB channel configured with a single-path multi-syllable planar reflecting *PLR*-sub-system $\Re_{4M(ps)}(4,f)d_{\Re 4M(ps)}j_{\Re 4M(ps)}$ and may comprise a scanning mode with a single-planar arc-wise transition $p\overline{\omega}$ or harmonically scanning with an arc-wise transition $h\overline{\omega}$.

Fig. 55 shows an IB channel configured with a single-path multi-syllable planar reflecting *PLR*-sub-system $\Re_{4Up}(4,v)pv1$ which comprises a single-planar scanning mode with angled transition $pv$.

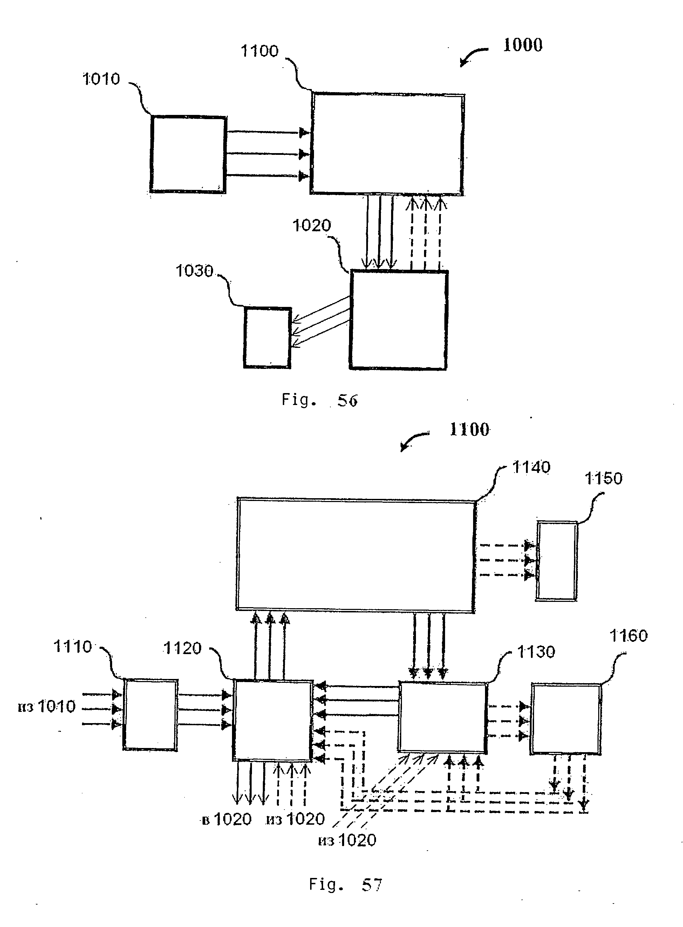

Mass-spectrometer, as a complex comprises several blocks, is shown in Figs. 56 and 57, wherein feasible transitions and directions of three-path ion flux between MS-blocks are shown as a leader line and dash line, corresponding to a forward and rearward motion of ions flux.

Moreover the MS comprises a controlling-computer block (not shown in figures), to control and manage the operations of all blocks of the mass-spectrometer as well as to support data acquisition and data processing.

Fig. 56 represents a general block diagram of the MS 1000, wherein ion flux leaving the ionic source unit 1010 enters the block-structured docking group 1100. Ionic source unit 1010 comprises one or more ionization chambers and systems of samples ionization. The ion flux after leaving the block-structured docking group 1100 enters the dispersing analyzer block 1020.

Figs. 56 and 57 show dispersing analyzer out-of-door block 1020, and an ion flux from a dispersing analyzer block 1020 may be supplied backward to a block-structured docking group 1100 and/or into detector elements 1030 of dispersing analyzer block (in dispersing analyzer IB channel). When a dispersing analyzer block 1020 is performed in a one-port version (e.g., dispersing analyzer block 1020 is performed in a Fourier-analyzer version) detector elements 1030 of dispersing analyzer block are not provided.

Fig. 57 shows a block diagram of a block-structured docking group 1100 constituted of five blocks (extended block-multiplex version) and comprising: a pre-shaping block 1110, distributing accelerator block 1120, block of refinement cell 1130, ions trapping block 1140, detector elements 1150 of ions trapping block (IB channels) and block of further ions accumulation 1160. In Figure 57, in case of failing block of further ions accumulation 1160, a block diagram of a block-structured docking group 1100 comprises four blocks (block-multiplex version). The MS performed in an extended block-multiplex version or in a block-multiplex version of block-structured docking group 1100 allows to performing a structure analysis in a MS<n> mode.

The block diagram of a block-structured docking group 1100 constituted of minimal number (two) of blocks (small-modular version) comprises a pre-shaping block 1110 and distributing accelerator block 1120. The MS performed with said block-structured docking group 1100 makes it possible to carry only a single-stage mass-spectrometry.

The block diagram of a block-structured docking group 1100 constituted of three blocks (mean-modality version) comprises a pre-shaping block 1110, a distributing-accelerating block 1120 and a block of refinement cell 1130. The MS performed with said block-structured docking group 1100 makes it possible to carry out structure analyses.

**Claims**

**1.** A method of mass-spectrometry, comprising:

**(i)** Ionize a substance sample in an ionic source unit and remove an ion flux out it, form an ion flux and control its motion including its mass dispersion by ions masses (mass dispersion by values of their mass/charge ratios, m/z) with, at least, one of magnetic and electric fields generated by groups of ion-conducting blocks composed of ion-conducting IB-channels with boundary surfaces and an IO channel subsystem, which each is a part of a MS-channel with an IO system (series-connected ion-conducting IB-channels and ionic source IB-channel of ionic source unit), wherein said channel IO system, at least, of one ion-conducting IB-channel is performed being selected among series comprising such its types as linear, curvilinear in mode of cross-space mass dispersing and in reflecting mode;
**(ii)** Register ions, at least, by means of one detector group of a detector system;
**(iii)** Control and manage operations of all blocks of a mass-spectrometer as well as support the data processing by means of a controller-computer system;

*wherein* to form and control ions fluxes, at least, one characteristic feature is performed and used being selected among series comprising:

**(a)** a multipath method of mass-spectrometry requiring feasibility of simultaneous mass-spectrometry of, at least, two ions flux paths, among them ions paths with multiply connected surfaces of cross-sections, wherein ion flux is supplied by an ionic source unit;

**(b)** a three-dimensional reflecting (3*D*-reflecting) method of mass-spectrometry requiring to use a three-dimensional reflecting IO sub-system (3*D*- reflector), comprising, at least, two IO means of reflection, which set of averaged front vectors are not located on one straight line and they are performed, at least, of one type selected among series comprising: an arc-wise reflecting $\overline{\omega}$-type and a loop-shaped reflecting element of a $\rho$-type double-reflecting block, and an angled reflecting IO element of $\nu$-type, and wherein a 3*D*-reflector is used for time-of-flight dispersion by ion masses, transverse space focusing and time-of-flight focusing by ions energy in ion packets;

**(c)** at least, one characteristic feature selected among series comprising application of electric fields such as transversely discontinuous conic fields, three-dimensional distribution in area of reflection.

**2.** **The method of claim 1,** *wherein* at least, one of its ion-conducting IB channels of ion-conducting MS-block provides a mass-spectrometry selected among series comprising channel-single-path and channel-multipath modes.

**3.** **The method of claim 2,** *wherein* a mass-spectrometry is performed through using, at least, one of the modes selected among series comprising: a single-stage mode, a *MS*/*MS* - type, a *MS⟨n⟩*-type, as well as liquid chromatographs combined with a mass-spectrometer *LC/MS*, and through performing series steps of ions flux transfer conforming to any adequate version of modularity level, among them an extended-multi-modular version comprising an ionic source block, pre-shaping block, a distributing accelerator block, a block of refinement cell, an ions trapping block, a further ions accumulation block and a dispersing analyzer block.

**4.** **The method of claim 3,** *wherein* a mass-spectrometry is performed at least, in one MS-channel through series steps of ions flux transfer conforming to a first version of extended-multi-modular operating mode:

**(ab)** Inject a channel ions flux by an ionic source IB channel in a pre-shaping **IB** channel;
**(bc)** Remove a channel ions flux out of a pre-shaping IB channel and supply it in a distributing accelerator IB channel;
**(cd)** Remove a channel ions flux out of a distributing accelerator IB channel and supply it in an ions trapping IB channel as well as to register a channel ions flux, at least, in one detector element of an ions trapping IB;
**(de)** Remove a channel ions flux out of an ions trapping IB channel and supply it in a refinement cell;

- Select among series comprising {(ec) and (ef)}: remove a channel ions flux out of refinement cell and supply it, depending on channel ions flux composition, after the said ion flux was processed in the refinement cell, at the option, into one of two channels, respectively: in a distributing accelerator IB channel; in an IB channel to further accumulate and store the ions of selected ions masses plurality;

at least, one cycle (Q11), comprising increments (cd), (de); select among series comprising {(ec) and (ef)} to accumulate the ions of selected masses plurality in an IB channel of further ions accumulation;

- Select among series comprising (fc) and {(fe) and further (ec)}: remove a channel ions flux out of an IB channel of further ions accumulation and then introduce it, at the option, respectively in one of two channels: in a distributing accelerator IB channel; in a refinement cell and further (remove a channel ions flux out of a refinement cell and introduce it in a distributing accelerator IB channel);

at least, one cycle (Q12), comprising (Q11) succeeded by selection among series comprising (fc) and {(fe), and further (ec)};
(cg) Remove a channel ions flux out of a distributing accelerator IB channel and introduce it in a dispersing analyzer IB channel, as well as to register a channel ions flux, at least, in one detector element of a dispersing analyzer IB channel;

- depending on results of performance on the increment (cg), perform increments, at the option, according to one of two series (i) and (ii):

(i) at least, one cycle (Q13), comprising performance of all sequential increments, beginning with (ab) through (cg) inclusive, mentioned in this paragraph;
(ii) select among series comprising (ge) or {(gc) and further (ce)}: remove a channel ions flux out of a dispersing analyzer of its IB channel and introduce a channel ions flux, at the option, respectively in one of two channels: in a refinement cell; in a distributing accelerator IB channel and further (remove a channel ions flux out of a distributing accelerator IB channel and introduce it in a refinement cell); at least, one cycle (Q14), comprising performance of all increments beginning with selection among series comprising {(ec) and (ef)} through (cg) inclusive.

5. **The method of claim 3,** *wherein* at least, in one MS-channel a mass-spectrometry is performed through sequential increments on transferring channel ions flux pursuant to second version of extended multi-modular operation mode:

(ab); (bc); (cd); (de);

- select among series comprising {(ec) and (ef)};

(Q11);

- select among series comprising (fc) and {(fe), and further (ec)};

(cg);

- depending on results of increment (cg) carrying out, perform increments according to one of two series (i) and (ii):

(i) at least, one cycle (Q23), comprising sequential performance of all increments, beginning with (ab) through (cg) inclusive, mentioned in this paragraph;
(ii) select among the group of increments, comprising (ge) and {(gc), and further (ce)}, at least, one cycle of increments (24), comprising sequential performance of all increments, beginning with selection among series comprising (ec) and (ef) through (cg) inclusive.

6. **The method of claim 3,** *wherein* at least, in one MS-channel a mass-spectrometry is performed through sequential increments on transferring channel ions flux pursuant to a version of multi-modular operation mode, by-passing an IB channel of further ions accumulation, in case of extended multi-modular MS, that is also true for a failing IB channel of further ions accumulation in the MS structure:

(ab); (bc); (cd); (de); (ec);
at least, one cycle (Q31), comprising (cd), (de) and (ec) increments;
(cg);

- depending on results of increment (cg) carrying out, perform increments according to one of two series (i), and (ii):

(i) at least, one cycle (Q33), comprising sequential performance of all increments beginning with (ab) through (cg) inclusive;
(ii) select among the group of increments, comprising (ge) and {(gc) and further (ce)}; at least, one cycle (Q34), comprising performance of all increments, beginning with (ec) through (cg) inclusive.

7. **The method of claim 3,** *wherein* at least, in one MS-channel a mass-spectrometry is performed through sequential increments on transferring channel ions flux pursuant to a version of mean modularity level of operation mode without ions trapping, by-passing the IB channels of further ions accumulation and IB channel of ions trapping in version of extended multi-modular MS, that is also true for a failing IB channels of further ions accumulation and IB channel of ions trapping in the MS structure:

(ab); (bc); (cg); (ge) or {(gc) and further (ce)}; (ec); (cg);

- depending results of increment (cg) carrying out, perform increments according to one of two series (i) and (ii):

(i) at least, one cycle (Q43), comprising sequential performance of all increments, beginning with (ab) through (cg) inclusive;

(ii) select among the group of increments, comprising (ge) and {(gc), and further (ce)}; at least, one cycle of increments, beginning with (ec) through (cg) inclusive.

8. **The method of claim 3, *wherein*** at least, in one MS-channel a mass-spectrometry is performed through sequential increments on transferring channel ions flux pursuant to a version of mean modularity level of operation mode without ions refinement, by-passing an IB channel of further ions accumulation and an IB channel of refinement cell in version of extended multi-modular MS, that is also true for a failing IB channel of further ions accumulation and IB channel of refinement cell in the MS structure:

> (ab); (bc); (cd);
> (dc) Remove a channel ions flux out of an ions trapping IB channel and introduce it in a distributing accelerator IB channel;
> at least, one cycle (Q51), comprising (cd) and (dc) increments;
> (cg)

9. **The method of Claim 3, *wherein*** at least, in one MS-channel a mass-spectrometry is performed through sequential increments on transferring channel ions flux pursuant to a small-modular version of operation mode, by-passing an IB channel of further ions accumulation, an ions trapping IB channel and an IB channel of refinement cell in version of extended multi-modular MS, that is also true for a failing IB channel of further ions accumulation, an ions trapping IB channel and an IB channel of refinement cell in the MS structure:

> (ab); (bc); (cg).

10. **The method of any claims 3-9, *wherein*** path ion fluxes received from different sources (e.g.: from different objects/processes; from different parts of one object/process), are supplied in ion-conducting blocks through different outlet gates of ionic source system.

11. **The method of any claims 3-10, *wherein*** path ion fluxes, outgoing from different outlet gates of an ionic source unit, are supplied independently of one other or in time correlation dependence from one another, e.g., at the same time or by turns in a specified time frame.

12. **The method of any claims 3-11, *wherein*** pre-filtering is performed with option to select any preferred ranges of masses and/or energy.

13. **The method of any claims 3-12, *wherein*** values of dispersion by masses are controlled.

14. **The method of any claims 3-13, *wherein*** a mass-spectrometry is performed concurrently to the energy-spectrometry within a specified interval of energy spectrum range.

15. **The method of any claims 3-14, *wherein*** a transverse space focusing of ions flux is performed along the direction of its moving mainly by means of regulated pulsating voltage.

16. **The method of any claims 3-15, *wherein*** each path ion flux is detected by an individual detector of a detector system.

17. **The method of any claims 1-16, *wherein*** an ionic source is used in one of the modes selected among series comprising continuous ions flux generation and pulse ions flux generation.

18. **The method of any claims 1-17, *wherein*** one of cyclicity modes is used being selected among series comprising a single-running and a multi-running ions passage through an IB channel.

19. **The method of any claims 1-18, *wherein*** a time-of-flight (TOF) mass-spectrometry is performed, at least, in one of ion-conducting IB channels of an ion-conducting MS-block.

20. **The method of any claims 1-19, *wherein***, at least, one of modes *MS/MS*-types, *MS⟨n⟩*-type are performed, i.e., through using liquid chromatographs combined with mass-spectrometers *LC/MS* provides that the time-of-flight mass-spectrometry is implemented by means of an "embedded times" method.

21. A nonmagnetic IO element comprising at least two electrodes configured to control charged particles fluxes having geometric design properties and electrical potential-functional features and performed being selected among series comprising as follows: extended and local transversely discontinuous conic reflecting IO elements, among them single-zonal, single-zonal ones: vertical-double-zonal, horizontal-double-zonal, and their mixed single-zonal types; local transversely discontinuous conic refracting IO elements; reflecting IO elements with three-dimensional reflecting areas, comprising transversely discontinuous conic reflecting IO elements; extended refracting IO elements, the transversely discontinuous conic IO elements inclusive.

22. **The IO element of Claim 21,** *wherein* it is performed being selected among series comprising: without diaphragm; with diaphragm, arranged transversely to a main axis of the IO element and performed with curvatures $R_X$ and $R_Y$, respectively, in two mutually perpendicular directions of symmetry vertical which values are selected as restrained within ranges: $\left(-\dfrac{h_X}{2}\right) \leq R_X \leq \dfrac{h_X}{2}$ and $\left(-\dfrac{h_Y}{2}\right) \leq R_Y \leq \dfrac{h_Y}{2}$, where: $h_X$ and $h_Y$ are internal electrode height and width, respectively.

23. **The IO element of Claim 21,** *wherein* it is selected among series comprising the types such as follows: a diaphragm is performed separately from its adjacent electrode; a diaphragm is performed inseparably with its adjacent electrode.

24. **The IO element of Claim 21,** *wherein* it is selected among series comprising the types such as follows:

   - a local single-piece element wherein, at least, one of electrodes is performed as a single-piece and its transverse section is formed through integrating an arbitrary quantity of constituting parts, selected among the group of shapes: straight line, segment of second-order curve, including formation of ellipsoid, circle and any closed curve;
   - a local and extended element, wherein, at least, one electrode is performed longwise-doubly-discontinuous which longitudinal section is formed as a horizontal-doubly discontinuous and resulting segments formed herein are arranged symmetrically on the both sides of a horizontal plane;
   - a local element with mutually transverse electrodes, wherein, at least, two electrodes are performed mutually transverse, one of them is performed as the above mentioned longwise-doubly-discontinuous, while one other is performed as a vertical-doubly discontinuous comprising two, in particular, identical constituting parts, arranged symmetrically on the both sides of a longitudinal-vertical plane; in a particular case the said two electrodes are performed as cross wisely integrated relative to each other and constituting segments of a vertical-doubly-discontinuous electrode are arranged in a discontinuity space of two constituting parts of horizontal-doubly discontinuous electrode;

25. **The IO element of any Claims 21-24,** *wherein* its transversely discontinuous conic type is performed within inter-electrode limits wherein electrodes are spaced relatively to each other and arranged cross wisely to the base plane of conic IO element and selected among series comprising the types as follows:

   - a longwise-conic IO element performed with longwise-vertical extension consisting, at least, in one extension, on average, at least, in one direction of a longwise vertical section;
   - a transversely conic IO element performed with horizontal extension consisting, at least, in one extension, on average, at least, in one direction of horizontal section;
   - a crosswise conic IO element performed with longwise-vertical and horizontal extensions, including its longwise two-dimensional type and bisymmetrical type, having two mutually perpendicular planes of symmetry which one is a horizontal plane, one other is a longwise-vertical plane of symmetry intercrossing along an axis of symmetry of a bisymmetrical 10 element.

26. **The 10 element of Claim 25,** *wherein* its longwise-vertical extension is performed being selected among series comprising: homogeneous and transitional dimensional types, wherein its transitional variable type is performed being selected among series of its sub-types, comprising, at least, one transition selected among series comprising: a parallel-stepwise transition, an angular inclined transition, an inclined-stepwise transition.

27. **The 10 element of Claim 26,** *wherein* at least, two its adjacent electrodes are performed with inter-electrode limits wherein configuration of its projection onto a horizontal plane is selected among series comprising: a straight line for local and extended elements; a segment of second-order curve for local element; periodic segments of second-order curve for an extended element, forming a sectoral trans-bending IO element with a sectoral trans-bending field distribution.

**28. The 10 element of any Claims 25-27,** *wherein* a crosswise-vertical section configuration, at least, of one its longwise-discontinuous electrode is performed being selected among series comprising: a straight line for local and for extended IO elements; a segment of second-order curve for local 10 element; a straight line and periodic segments of second-order curve for an extended IO element.

**29. The 10 element of Claim 28,** *wherein* constituting segments of its electrode configured as segments of second-order curve are arranged being selected among series comprising convexities to each other and concavities to each other.

**30. The 10 element of any Claims 21-29,** *wherein* a reflecting type is performed being selected among series comprising the following: without closure and with closure from the side of ions reflection which is arranged crosswise to a main axis of IO element and performed with curvatures $R_X$ and $R_Y$, respectively, in two mutually perpendicular directions relatively to the vertical of symmetry, which values are selected being limited within range $(-\frac{h_X}{2}) \leq R_X \leq \frac{h_X}{2}$ and $(-\frac{h_Y}{2}) \leq R_Y \leq \frac{h_Y}{2}$, where: $h_X$ and $h_Y$ are an internal electrode height and a width, respectively.

**31. The IO element of Claim 30,** *wherein* its type with closure is performed being selected among series comprising the following: a closure performed separately of its adjacent electrode; a closure performed inseparably with its adjacent electrode.

**32. The IO element of** any **Claims 21-31,** *wherein* its reflecting type comprises, at least, one of electrodes from the side of ions reflection and it is performed with a curvature, at least, in one of two mutually perpendicular directions of the vertical of symmetry.

**33. The IO element of any Claims 30-32,** *wherein* it is performed as a single-zonal IO element of reflection with a single area of reflection, with individual zones to entering ions flux and exiting ions flux from it which are separated and it comprises, at least, one of optional modes combinations: at least, one inter-zonal electrode constituting segment being common of two zones and forming an electrode-connected IO element; one of the said zones comprises, at least, one electrode performed separately of electrodes in other zones, at that the angle of divergence $\gamma_{n12}$, defined by angle, between a single-unit front vectors $\vec{n}_1$ and $\vec{n}_2$, respectively, of an entry zone and an exit zone, is confined within range $0 < \gamma_{n12} \leq \frac{\pi}{2}$.

**34. The 10 element of Claim 33** performed being selected among series comprising its types generated at different values of projections of the said angle of divergence: a vertical single-zonal type, wherein conditions are satisfied for a value of projection $\gamma_{n12\vee} = 0$ onto a horizontal plane and value of projection $\gamma_{n12\wedge} \neq 0$ onto a vertical plane; horizontal single-zonal type, wherein conditions are satisfied for a value of projection $\gamma_{n12\vee} \neq 0$ onto a horizontal plane and value of projection $\gamma_{n12\wedge} = 0$ onto a vertical plane; mixed single-zonal type, wherein conditions are satisfied for a value of projection $\gamma_{n12\vee} \neq 0$ onto a horizontal plane and a value of projection $\gamma_{n12\wedge} \neq 0$ onto a vertical plane.

**35. The 10 element of Claim 34,** *wherein* spaced segments of its adjacent electrodes of two zones are provided with uncoupled separate electrodes and have identical electric potentials.

**36. The 10 element of Claim 34,** *wherein* spaced segments of its adjacent electrodes of two zones are provided with uncoupled separate electrodes and have different electric potentials.

**37. The 10 element of any Claims 33-36,** *wherein* its vertical-single-zonal type is performed symmetrical.

**38. The 10 element of any Claims 21-37,** *wherein* its extended type is selected among series comprising:

   - an integrally-extended IO element performed with no spacing electrodes in direction of axis of extension;
   - a massively extended IO element comprising a massive of local IO elements, arranged, in particular, identically one above the other along a selected axis of extension of an IO element, and their front edges are arranged in one plane;
- a mixed extended 10 element comprising, at least, one local 10 element and one integrally-extended IO element.

39. **The IO element of Claim 38, *wherein*** its integrally-extended type is performed being selected among series comprising a two-dimensional conic element, a three-dimensional element of periodic structure, in particular, a periodic doubly symmetrical element.

40. **The 10 element of any Claims 21-39, *wherein*** its massively extended type is performed being selected among series comprising a two-dimensional element, a three-dimensional element of periodic structure, especially, a periodic doubly symmetrical element, wherein a value of acute angle $\omega_\angle$ between mean planes of local elements and a plane perpendicular to an axis of extension is confined within range $0 \leq \omega_\angle < \dfrac{\pi}{2}$.

41. **The IO element of Claim 40, *wherein***, provided that the $\omega_\angle$ = 0, its two adjacent identical local IO elements are performed as electrode-connected.

42. **A reflecting IO sub-system** provided with IO means of reflection to control an ions flux comprises, at least, one specific feature selected among series as follows:

(a) a multi-vertex three-dimensional reflecting IO sub-system (3*D*-reflector), comprising, at least, two IO means of reflection, which plurality of averaged front vectors is not located on one straight line and it is performed at least, of one type, selected among series comprising an arc-wise reflecting $\overline{\omega}$-type and a loop-shaped reflecting $\rho$-type of double-reflecting block and angled reflecting IO element of $\nu$-type and wherein a 3*D* -reflector is used for a time-of-flight dispersion by ion masses, for a transverse space focusing, for a time-of-flight focusing by ions energy in ion packets;
(b) at least, one IO element selected among series comprising: extended and local transversely discontinuous conic reflecting 10 elements, among them single-zonal, double-zonal types: a vertical double-zonal, a horizontal double-zonal, and their mixed single-zonal types; local transversely discontinuous conic refracting IO elements; reflecting IO elements with a three-dimensional area of reflection, among them transversely discontinuous conic IO elements of reflection; extended refracting IO elements, among them transversely discontinuous conic 10 elements of refraction.

43. **The 10 sub-system of Claim 42,** performed being selected among the types such as follows: a single-syllable reflecting $A_{\kappa U(ps)}(\kappa,f)$ and a multi-syllable reflecting $A_{\kappa M}(\kappa,f)$, where: symbol A designates a type of reflecting 10 sub-system formation, which depends on geometry of each IO means of reflection and on potentials at each their electrode as well as on a spatial arrangement of reflecting IO means relative to each other and mutual orientation of their averaged front vectors; symbol $\kappa$ defines a quantity of reflecting IO means, which complies with the quantity of vertices in a reflecting IO sub-system; symbol $U$ is a feature of single-syllable reflecting capacity of an IO sub-system, wherein IO means of reflection is selected among the types as follows: extended and local; symbol (*ps*) is a two-position index (*ps*) = *p, s,* and designates that the reflecting 10 sub-system is a plane-reflecting one at (*ps*) = *p*, and incrementally reflecting at (*ps*) = *s*; symbol *M* is a feature of multi-syllable reflecting capacity of an IO sub-system, wherein reflecting 10 means are performed being extended; combination of ($\kappa,f$) based on a quantity $\kappa$ and types $f = \nu, \rho, \overline{\omega}$ of reflecting IO means designates the type of reflecting 10 means at each vertex of an IO reflecting sub-system, e.g., by numbers of reflecting 10 means, assigned according to the sequence of ions reflections along the ions flux movement;

44. **The IO sub-system of Claim 43,** performed as a single-syllable reflecting IO sub-system with local IO means of reflection types as follows: plane-reflecting type at (*ps*) = *p* and all IO means of reflection are arranged on the same level in parallel with a base plane of reflecting IO sub-system; incrementally reflecting type at (*ps*) = *s* and local IO means of reflection are arranged on different levels, in particular, at periodic distance relatively to a base plane of a reflecting IO sub-system.

45. **The 10 sub-system of Claim 43** performed of narrow configuration wherein a distance between two conjugated IO means of reflection is larger than the dimensions of IO means of reflection themselves and larger than a distance between two adjacent non-conjugated IO means of reflection, if any.

46. **The IO sub-system of Claim 43,** wherein, at least, one of its 10 means of reflection is performed being selected among series comprising:

(a) local and massively extended horizontally continuous means of reflection, where a value of angle $\omega_{\Sigma\lambda 1}$ between a horizontal plane of IO means of reflection and a base plane of reflecting IO sub-system is constrained within the range $0 \leq \omega_{\Sigma\lambda 1} < \dfrac{\pi}{6}$, moreover the said IO sub-system is performed with option allowing the averaged trajectory of path ion flux to pass over a M-surface of the IO means of reflection and in its proximity;

(b) local and integrally extended vertical-continuous IO means of reflection, wherein a value of angle $\omega_{\Sigma\lambda 2}$ between a longwise-vertical plane of the IO means of reflection and a base plane of reflecting IO sub-system is constrained within the range $0 \leq \omega_{\Sigma\lambda 2} < \dfrac{\pi}{6}$, moreover the said 10 sub-system is performed with option allowing the averaged trajectory of path ion flux to pass over a longitudinal-vertical plane of an 10 means of reflection and in its proximity.

**47.** **The 10 sub-system of Claim 43,** wherein its single-syllable reflecting type $A_{\kappa U(ps)}(\kappa, f)$ is selected among series comprising the types as follows: $A_{\kappa U(ps)}(\kappa, \nu\overline{\omega}) = A_{\kappa Up}(\nu), A_{\kappa Us}(\nu), A_{\kappa Up}(\overline{\omega}), A_{\kappa Us}(\overline{\omega})$: planar type $A_{\kappa Up}(\nu)$ and incremental type $A_{\kappa Us}(\nu)$, which each comprises an angled reflecting $\nu$-type of IO element of reflection; a planar type $A_{\kappa Up}(\overline{\omega})$ and an incremental type $A_{\kappa Us}(\overline{\omega})$, which each comprises an arc-wise reflecting IO means of $\overline{\omega}$- type.

**48.** **The 10 sub-system of Claim 43,** wherein its multi-syllable reflecting type $A_{\kappa M(ps)}(\kappa, \nu\overline{\omega})$ is selected among series comprising the types as follows: $A_{\kappa M(ps)}(\kappa, \nu\overline{\omega}) = A_{\kappa Mp}(\nu), A_{\kappa Ms}(\nu), A_{\kappa Mp}(\overline{\omega}), A_{\kappa Ms}(\overline{\omega})$: a planar type $A_{\kappa Mp}(\nu)$ and an incremental type $A_{\kappa Mp}(\overline{\omega})$, which each comprises the angled reflecting $\nu$-type of reflecting IO element; a planar type $A_{\kappa Mp}(\overline{\omega})$ and an incremental type $A_{\kappa Ms}(\overline{\omega})$, which each comprises an arc-wise reflecting IO means of $\overline{\omega}$- type.

**49.** **The 10 sub-system of any Claims 43-48** performed as a single-syllable N-shaped $N_{U(ps)}(2, f)$ type, comprising two IO means of reflection, which value of angle $\beta_{(12)1}$ between vectors, read counterclockwise from the unitary vector $\overset{\centerdot}{n}_{(12)}$ of conjugating axis of the said IO means of reflection in direction towards to an unitary averaged frontal vector $\overset{\centerdot}{n}_1$ of the first IO means of reflection is constrained within a range $0 < \beta_{(12)1} \leq \dfrac{\pi}{4}$ and $\dfrac{7\pi}{4} \leq \beta_{(12)1} < 2\pi$, value of angle $\beta_{(12)2}$ between vectors, read counterclockwise from the unitary vector $\overset{\centerdot}{n}_{(12)}$ in direction towards to an unitary averaged frontal vector $\overset{\centerdot}{n}_2$ of the second IO means of reflection, is constrained within a range

$$\pi < \beta_{(12)2} \leq \dfrac{5\pi}{4} \text{ at } 0 < \beta_{(12)1} \leq \dfrac{\pi}{4}, \text{ and } \dfrac{3\pi}{2} \leq \beta_{(12)2} < \pi \text{ at } \dfrac{7\pi}{4} \leq \beta_{(12)1} < 2\pi.$$

**50.** **The 10 sub-system of any Claims 43-48,** performed as a single-syllable $\mho$-shaped $\mho_{U(ps)}(2, f)$ type, comprising two IO means of reflection conjugated with a single-section electric segment arranged between them, wherein a value of angle between vectors, read counterclockwise from the unitary vector of axis conjugating first IO means of reflection with an electric segment in direction towards to the unitary averaged frontal vector of the first IO means of reflection, is constrained within a range $0 < \beta_{(12)1} \leq \dfrac{\pi}{4}$ and $\dfrac{7\pi}{4} \leq \beta_{(12)1} < 2\pi$, while a value of angle $\beta_{(12)2}$ between the vectors, read counterclockwise from the unitary vector of axis conjugating an electric segment with second IO means of reflection in direction towards to unitary averaged frontal vector of the second IO means of reflection, is constrained within the range $\pi < \beta_{(12)2} \leq \dfrac{5\pi}{4}$ and $\dfrac{3\pi}{2} \leq \beta_{(12)2} < \pi$.

**51. The IO sub-system of any Claims 43-48,** performed as a multi-syllable $C$-shaped incrementally reflecting $C_M(2,f)$ type, comprising two IO means of reflection conjugated with a single-section electric segment arranged between them, which in complex with the IO means of reflection is performed with option of multiple reflection at two extended IO means of reflection through a segment of cylindrical capacitor where the ions flux moves along the $\hbar$- plane of the IO sub-system.

**52. The IO sub-system of any Claims 43-48,** performed as a multi-syllable $\Lambda$-shaped incrementally reflecting $\Lambda_M(3,f)$ type, comprising three extended IO means of reflection, which unitary averaged front vectors $\dot{n}_1$ and $\dot{n}_3$ of the first and third IO elements of reflection, respectively, are directed toward to second IO means of reflection, while an unitary axial vector $\dot{n}_2$ of the second reflecting IO means is directed toward to first and second IO means of reflection, performed with option of multiple reflection where the ions flux moves along the $\hbar$-plane of the IO sub-system.

**53. The IO sub-system of any Claims 43-48,** performed as a multi-vertex type of the $PLR$-sub-system ($PLR$ is a loop reflecting projection) comprising, at least, one high-resolving double-vertex projection-loop-shaped-reflecting $HR2PLR$-block ($HR2PLR$ - high resolving double-vertex projection loop-reflecting) comprising two IO means of reflection, which value of angle $\beta_{(12)1}$ between vectors, read counterclockwise from the unitary vector $\dot{n}_{(12)}$ of conjugating axis of IO means of reflection in direction towards to the unitary averaged frontal vector $\dot{n}_1$ of the first IO means of reflection, is constrained within a range $0 < \beta_{(12)1} \le \dfrac{\pi}{4}$ and $\dfrac{7\pi}{4} \le \beta_{(12)1} < 2\pi$, while the value of angle $\beta_{(12)2}$ between vectors, read counterclockwise from the vector $\dot{n}_{(12)}$ in direction towards to unitary averaged frontal vector $\dot{n}_2$ of the second IO means of reflection, is constrained within a range

$$\pi < \beta_{(12)2} \le \frac{5\pi}{4} \text{ at } \frac{7\pi}{4} \le \beta_{(12)1} < 2\pi, \text{ and } \frac{3\pi}{2} \le \beta_{(12)2} < \pi \text{ at } 0 < \beta_{(12)1} \le \frac{\pi}{4}.$$

**54. The IO sub-system of Claim 53,** wherein its double-vertex type $\Re_{2U(ps)}(2,f)$ of the $PLR$-sub-system comprises two IO means of reflection $\kappa = 2$, performed as a type (forming) of the said $HR2PLR$ - block.

**55. The 10 sub-system of Claim 54,** wherein its IO means of reflection are performed identical, where a point of intersection, defined for a $HR2PLR$-block by said angles $2\beta_{(12)1}$ and $2\beta_{(12)2}$ of path axes of said IO means of reflection in projection on a base plane of reflecting IO sub-system, is a nodal projection point of the $HR2PLR$ - block.

**56. The IO sub-system of Claim 53** wherein a three-vertex type $\Re_{3U(ps)}(3,f)$ of the $PLR$-sub-system comprises three IO means of reflection $\kappa =3$, two of them are performed as a type of the $HR2PLR$-block, and an 10 means of reflection, arranged off the $HR2PLR$-block is a third additional IO means of reflection, and its spatial arrangement is selected among series comprising the versions as follows: on the axis defined by angle $2\beta_{(12)1}$ of the said $HR2PLR$-block and arranged adjacent to the second IO means of reflection of the $HR2PLR$-block; on the axis defined by angle $2\beta_{(12)2}$ of the said $HR2PLR$-block and arranged adjacent to the first IO means of reflection of the $HR2PLR$-block.

**57. The 10 sub-system of Claim 56,** wherein a spatial arrangement of its third additional IO means of reflection is selected among series comprising the types such as a triangle formed by straight lines, connecting each of two IO means of reflection: rectangular and equilateral.

**58. The IO sub-system of Claim 57** wherein a value of angle $\beta_{(12)3}$ between the vectors, read counterclockwise from the unitary vector $\dot{n}_{(12)}$ of the axis conjugating first and second IO means of reflection in direction towards to the unitary averaged front vector $n_3$ of the third additional 10 means of reflection, is constrained within the range $0 \leq 2\beta_{(12)3} \leq 0,6\pi$.

59. **The IO sub-system of Claim 53,** wherein any of four-vertex types $\Re_{4U(ps)}(4,f)$ and $\Re_{4M}(4,f)$ of the *PLR*-sub-system are performed being selected among the group providing their arrangement as follows: symmetrically and anti-symmetrically to their longitudinal-vertical plane, which is as well their longitudinal nodal plane; doubly symmetrical arrangement relatively to the longwise-vertical and transversely vertical planes, cutting each other along the axial line of the IO sub-system, passing through a common nodal projection point and perpendicular to a base plane of the IO sub-system.

60. **The 10 sub-system of Claim 59,** wherein two its adjacent IO elements of reflection are selected among the group comprising electrode-connected and electrode-separated (non-jointed) 10 elements.

61. **The 10 sub-system of Claim 60,** wherein any of its four-vertex types as follows: $\Re_{4U(ps)}(4,f)$ and $\Re_{4M}(4,f)$ of the *PLR*-sub-system provides four 10 means of reflection, performed as two *HR2PLR*- blocks, docked at their nodal projection points forming a two-loop IO sub-system with one common nodal projection point.

62. An IB channel to generate and control movements of channel ions flux of charged particles, comprising:

(i) at least, two boundary surfaces specified being selected among series comprising a conditionally specified surface, a surface coinciding with a boundary electrode of a channel IO sub-system, which are performed with exit gates wherein any one of electrodes is performed, at least, with one exit gate to passing the channel ions flux of charged particles as consisted with selection of boundary surface;
(ii) a channel IO sub-system of ion-conducting IB channel, performed being selected among series comprising such its types as linear, curvilinear, curvilinear with cross-space mass dispersion and reflecting IO sub-system;

IB channel performed comprising, at least, one characteristic feature, selected among the group comprising:

(a) at least, with two exit gates and with option to use it in a multi-path mode consisting in a concurrent use of, at least, two paths of ions flux, among them ions paths with multiply connected surfaces of a cross-section;
(b) at least, with one three-dimensional reflecting IO sub-system (3D-reflector), comprising, at least, two IO means of reflection, plurality of averaged front vectors not located on one straight line and performed at least, of one type, selected among series comprising: arc-wise reflecting $\overline{\omega}$-type and loop-shaped reflecting $\rho$-type of doubly-reflecting blocks and angled reflecting $\nu$-type of an IO element of reflection, wherein a 3D-reflector is used for a time-of-flight dispersion by ion masses, a transverse space focusing, a time-of-flight focusing by ions energy in the ions packets;
(c) at least, with one IO element selected among series comprising: extended and local transversely discontinuous conic reflecting IO elements, among them single-zonal and double-zonal: vertical double-zonal, horizontal double-zonal and their mixed double-zonal types; local transversely discontinuous conic refracting IO elements; refracting IO elements with three-dimensional refracting area, among them transversely discontinuous conic refracting IO elements; extended refracting IO elements, among them transversely discontinuous conic ones.

63. **The 10 channel of Claim 62,** performed being selected among series comprising its types as follows:

- with a single-syllable unidirectional linear IO sub-system $L_D j_{LD}$ where $j_{LD} \geq 2$;
- with a single-syllable single-reflecting 10 sub-system $\Gamma_D(1,f)j_{\Gamma D}$ where $j_{\Gamma D} \geq 2$;
- with a single-syllable N-shaped IO sub-system $N_{U(ps)}(2,f)d_{NU(ps)}j_{NU(ps)}$, segregated into single-syllable N -shaped planar reflecting $N_{Up}(2,f)d_{NUp}j_{NUp}$ and single-syllable N-shaped incrementally reflecting $N_{Us}(2,f)d_{NUs}j_{NUs}$ IO sub-systems;
- with a single-syllable $\mho$-shaped IO sub-system $\mho_{U(ps)(2,f)}d_{\mho U(ps)}j_{\mho U(ps)}$, segregated into single-syllable $\mho$-shaped planar-reflecting $\mho_{Up(2,f)}d_{\mho Up}j_{\mho Up}$ and single-syllable $\mho$ -shaped incrementally

reflecting $\mho_{Us(2,f)} d_{\mho Us} j_{\mho Us}$ IO sub-systems;

- with a single-syllable $\Sigma$-shaped IO sub-system $\Sigma_{U(ps)}(3,f)d_{\Sigma U(ps)}j_{\Sigma U(ps)}$, segregated into single-syllable $\Sigma$-shaped planar reflecting $\Sigma_{Up}(3,f)d_{\Sigma Up}j_{WUp}$ and single-syllable $\Sigma$-shaped incrementally reflecting $\Sigma_{Us}(3,f)d_{\Sigma Us}j_{\Sigma Us}$ IO sub-systems;

- with a single-syllable $n$-segmented sectoral 10 sub-system $S_{nU(ps)}j_{SnU(ps)}$ with $1 \le n \le 4$ and $J_{nS(ps)} \ge 2$, segregated into single-syllable $n$-segmented sectoral planar $S_{nUp}j_{SnUp}$ and single-syllable $n$-segmented sectoral incremental $S_{nUs}j_{SnUs}$ IO sub-systems;

- with a helical-multi-rotary sectoral incremental IO sub-system $S_{4M}j_{S4s}$;

- with a single-syllable multi-vertex *PLR*-sub-system $\mathfrak{R}_{\kappa U(ps)}(\kappa,f)d_{\mathfrak{R}\kappa U(ps)}j_{\mathfrak{R}\kappa U(ps)}$ segregated into

single-syllable multi-vertex planar-reflecting *PLR*-sub-system $\mathfrak{R}_{\kappa Up}(\kappa,f)d_{\mathfrak{R}\kappa Up}j_{\mathfrak{R}\kappa Up}$ and single-sylla-

ble multi-vertex incrementally reflecting *PLR*-sub-system $\mathfrak{R}_{\kappa Us}(\kappa,f)d_{\mathfrak{R}\kappa Us}j_{\mathfrak{R}\kappa Us}$, which as well are

segregated by quantity $\kappa = 2, 3, 4$ of reflecting 10 means;
- with a double-vertex linearly multi-syllable incrementally reflecting IO sub-system $I_M(2,f)d_{IM}j_{IM}$ with $j_{IM} \ge 2$ ;
- with a double-vertex *C*-shaped multi-syllable incrementally reflecting IO sub-system $C_M(2,f)d_{CM}j_{CM}$;
- with a three-vertex $\Lambda$-shaped multi-syllable incrementally reflecting IO sub-system $\Lambda_M(3,f)d_{\Lambda M}j_{\Lambda M}$,

- with a multi-syllable four-vertex *PLR*-sub-system $\mathfrak{R}_{4M(ps)}(4,f)d_{\mathfrak{R}4M(ps)}j_{\mathfrak{R}4M(ps)}$, segregated into

multi-syllable four-vertex planar reflecting *PLR*-sub-system $\mathfrak{R}_{4Mp}(4,f)d_{\mathfrak{R}4Mp}j_{\mathfrak{R}4Mp}$, multi-syllable

four-vertex incrementally reflecting *PLR*-sub-system $\mathfrak{R}_{4Ms}(4,f)d_{\mathfrak{R}4Ms}j_{\mathfrak{R}4Ms}$,

wherein:

- symbols such as $j_{LD}$, $j_{\Gamma D}$, $j_{NUp}$, $j_{NUs}$, $j_{\mho Up}$, $j_{\mho U}$, $j_{\Sigma Us}$, $j_{\Sigma Up}$, $j_{nSp}$, $j_{nUs}$,

$j_{\mathfrak{R}\kappa Up}$, $j_{\mathfrak{R}\kappa Us}$, $i_{IM}$, $j_{CM}$, $j_{\Lambda M}$, $j_{\mathfrak{R}4Mp}$, $j_{\mathfrak{R}4Ms}$ define quantity of paths in the IB channels, respectively designated by the said symbols;

- symbols such as $d_{NUs}$, $d_{\mho Us}$, $d_{\Sigma Us}$, $d_{\mathfrak{R}\kappa Us}$, $d_{IM}$, $d_{CM}$, $d_{\Lambda M}$, $d_{\mathfrak{R}4Ms}$, $d_{NUp}$, $d_{\mho Up}$, $d_{\Sigma Up}$, $d_{\mathfrak{R}\kappa Up}$,

$j_{\mathfrak{R}4Mp}$ define the types of ions trajectory scanning in incremental planes of reflecting 10 sub-systems, respectively designated by the said symbols:

types of canning $d_{NUs}$, $d_{\mho Us}$, $d_{\Sigma Us}$, $d_{\mathfrak{R}\kappa Us}$, $d_{IM}$, $d_{CM}$, $d_{\Lambda M}$, $d_{\mathfrak{R}4Ms}$ are selected among series comprising harmonic $h$, loop-shaped harmonic $h\rho$, arc-wise - harmonic $h\overline{\omega}$;

types of scanning $d_{NUp}$, $d_{\mho Up}$, $d_{\Sigma Up}$, $d_{\mathfrak{R}\kappa Up}$ are selected among series comprising planar reflecting without transition $p$, planar reflecting with angled transition $pv$, planar reflecting with loop-shaped transition $p\rho$, planar reflecting with arc-wise transition $p\overline{\omega}$;

type of scanning $d_{\mathfrak{R}4Mp}$ is selected among series comprising planar reflecting with angled transition $pv$, planar reflecting with loop-shaped transition $p\rho$, planar reflecting with arc-wise transition $p\overline{\omega}$.

**64. Missed**

**65. The 10 channel of Claim 63,** *wherein* its planar reflecting IO sub-system comprises a single-plane reflection and types of scanning as follows: planar reflecting with angled transition $p\nu$, planar reflecting with loop-shaped transition $p\rho$, planar reflecting with arc-wise transition $p\overline{\omega}$, comprising, respectively, an angled reflecting IO element of $\nu$-type, an arc-wise reflecting IO element of $\overline{\omega}$-type and loop-shaped reflecting $\rho$-type IO element of a doubly reflecting block, which spatial orientations of horizontal planes are selected considering architecture of the IO sub-system and assigned task.

**66. The 10 channel of Claim 65,** *wherein* planar reflecting IO sub-system provides that the mean planes of angled reflecting IO element of $\nu$-type, arc-wise reflecting 10 element of $\overline{\omega}$-type and loop-shaped reflecting element of $\rho$-type in double reflecting block are arranged relatively to a base plane of the planar reflecting IO sub-system at an acute angle, which value is larger than the zero and less than $\dfrac{\pi}{2}$;

**67. The IO channel of Claim 63,** *wherein* it additionally comprises, at least, one IO means of refraction selected among series comprising its extended and local types as follows:

- An IO means of refraction with straight axis, performed with option to be used in one of the modes, among them telescopic operation mode and space focusing, at least, in one of transverse directions towards to the ions path motion;
- An 10 means of refraction with curved axis providing external refracting transition, performed with option to be used in one of the modes, among them, telescopic operation mode and space focusing, at least, in one of transverse directions towards to the ions path motion.

**68. The 10 channel of Claim 67,** *wherein* its additional IO means of refraction is arranged, at least, in one of positions selected among the group comprising: arrangement at the entry, at the exit; between the IO means of reflection, covering a front area of path axis of the reflecting IO sub-system, and performed being selected among series comprising the types as follows: extended two-dimensional and periodically three-dimensional, in particular, with constant heights; between the 10 means of reflection, covering the area of nodal point of path axes of the reflecting 10 sub-system, and performed being selected among series comprising: electrode-connected two-element IO block of refraction with curved axis, i.e., integrated IO block of refraction comprising two electrode-connected IO elements of refraction; electrode-connected four-element IO block of refraction with curved axis, i.e., two integrated IO block of refraction, which each comprises two electrode-connected IO elements of refraction, performed symmetrical to a nodal point.

**69. The IO channel of any Claims 67 and 68,** *wherein* its additional IO means of refraction is located off the field in a drift space.

**70. The IO channel of Claim 68,** *wherein* its additional IO means of refraction with curved axis is included in an incrementally reflecting 10 sub-system wherein the types of scanning such as $d_{NUs}$, $d_{\mho Us}$, $d_{\Sigma Us}$, $d_{\Re\kappa Us}$, $d_{IM}$, $d_{CM}$, $d_{\Lambda M}$, $d_{\Re 4Ms}$, $d_{\Re 4Ms}$ are selected among series comprising harmonically with an external refracting transition $h\perp$, loop-shaped harmonically with an external refracting transition $h\rho\perp$, an arc-wise harmonically with an external refracting transition $h\overline{\omega}\perp$; in a planar reflecting IO sub-system, wherein types scanning $d_{NUp}$, $d_{\mho Up}$, $d_{\Sigma Up}$, $d_{\Re\kappa Up}$, $j_{\Re 4Mp}$ are selected among series comprising plane-reflecting transitions: with an external refracting transition $p\perp$, with an angled and an external refracting transition $p\nu\perp$, with an loop-shaped and an external refracting transition $p\rho\perp$, with an arc-wise and an external refracting transition $p\overline{\omega}\perp$;

**71. The IO channel of Claim 70,** *wherein* its IO means of refraction with curved axis is performed covering additionally, at least, on one side of reflecting IO sub-system over its vertical plane, an area to passing ions flux and it is performed with option to be used, at least, in one modes of ions flux introducing into a reflecting IO sub-system and ions flux removing from a reflecting IO sub-system.

**72. The IO channel of Claim 70,** *wherein* at least, one of its IO means of reflection is performed with option to be used in two and more modes of applying electric potentials to introduce an ions flux into an IO sub-system and to remove an ions flux from it.

**73. The 10 channel of Claim 70,** *wherein* it additionally comprises, at least, on one side of its entry and its exit to introduce an ions flux into a reflecting IO sub-system and to remove an ions flux from it, respectively, an additional IO means selected among series comprising local and extended 10 means of reflection, IO means of refraction with straight axis, 10 means of refraction with curved axis to provide an external refracting transition.

**74. The 10 channel of Claim 73,** *wherein* its additional IO means is performed being selected among series comprising multifunctional IO blocks and elements, and performed with option of, at least, two modes of operation among the group, comprising IO means of reflection, IO means of refraction with curved axis, and field-less mode.

**75.** A mass-spectrometer (MS), comprising:

(i) MS-blocks including: an ionic source block; a group of ion conducting blocks, comprising a block-structured docking group, and an analyzing-dispersing block, wherein the said blocks comprise IB-channels with boundary surfaces and IO channel subsystems, comprising:

- an IB channel, adequate to its block, which is a part of an MS-channel integrating ion-conducting IB channels of ion-conducting blocks jointly with an ionic source IB channel of an ionic source unit;
- a channel IO sub-system, adequate to its IB channel, which is a part of the IO system of the MS-channel, integrating IO systems of ion-conducting IB channels jointly with an IO system of ionic source IB channel;
- ion-conducting IB channels which comprise, at least, two boundary surfaces, assigned being selected among series comprising types of surfaces such as a conditionally assigned surface, surface coinciding with a boundary electrode of a channel 10 sub-system, any one of them performed, at least, with one exit gate (to passing the channel ions flux), as consisted with selection of boundary surface;
- an IO sub-system of, at least, one ion-conducting IB-channel which is performed being selected among series comprising such its types as linear, curvilinear, curvilinear with cross-space mass dispersing and reflecting IO sub-system;

(ii) a detector system;
(iii) a controller-computer system,

*wherein* it is performed comprising, at least, one characteristic feature, selected among the group comprising:

(a) an ionic source block performed, at least, with two exit gates, and an MS performed with option to carry out concurrently a mass-spectrometry of, at least, two ions flux paths, among them ions paths with multiply connected surfaces of cross-sections, wherein the ion flux is injected by an ionic source unit;
(b) a reflecting **IO** sub-system performed three-dimensional (3*D*-reflector) and comprising, at least, two IO means of reflection, plurality of averaged front vectors which are not located on one straight line and are performed, at least, in one type, selected among series comprising doubly reflecting blocks of arc-wise $\overline{\omega}$-type and loop-shaped $\rho$-type as well as an angled reflecting IO element of $\nu$-type, and a 3*D*-reflector is used for a time-of-flight dispersion by ion masses, a transverse space focusing, a time-of-flight focusing by ions energy in ion packets;
(c) at least, one IO element selected among series comprising: extended and local transversely discontinuous conic reflecting IO elements, among them single-zonal, double-zonal: vertical-double-zonal, horizontal-double-zonal, and their mixed double-zonal types; local transversely discontinuous conic IO refracting elements; IO elements of reflection with three-dimensional area of reflection, among them transversely discontinuous conic IO elements of reflection; extended refracting IO elements, among them transversely discontinuous conic IO elements.

**76. The MS of Claim 75,** *wherein* at least, one its ion-conducting MS-block comprises, at least, one IB channel, selected among series comprising such its types as channel single-path and channel-multipath.

**77. The MS of any Claims 75-76,** *wherein* at least, one its MS-channel is performed with option to be used, at least, in one of mass-spectrometry modes as follows: single-stage type, *MS/MS*-type, *MS⟨n⟩*-type, combinations of liquid chromatographs with mass-spectrometers *LC/MS,* and sequential increments in ions flux transferring pursuant to a version selected among the group of operation modes as follows:

- pursuant to first version of extended multi-modular operation mode wherein the MS is performed as an extended block-multiplex device;
- pursuant to second version of extended multi-modular operation mode wherein the MS is performed as an extended block-multiplex device;
- pursuant to version of multi-modular operation mode, by-passing the IB channels of further ions accumulation wherein an extended multi-modular MS is provided, with failing IB channel of further ions accumulation in the MS structure inclusive;
- pursuant to version of mean modularity level of operation mode without of ions trapping, by-passing the IB channel of further ions accumulation and IB channel of ions trapping wherein an extended multi-modular MS is provided, with failing IB channel of further ions accumulation and IB channel of ions trapping in the MS structure inclusive;
- pursuant to version of mean modularity level of operation mode with failing ions refinement, by-passing the IB channel of further ions accumulation and IB channel of the refinement cell wherein an extended multi-modular MS is provided, with failing IB channel of further ions accumulation and IB channel of the refinement cell in the MS structure inclusive;
- pursuant to version of small-modular operation mode, by-passing the IB channel of further ions accumulation, IB channel of ions trapping and IB channel of the refinement cell wherein an extended multi-modular MS is provided, with failing IB channel of further ions accumulation, IB channel of ions trapping and IB channel of the refinement cell in the MS structure inclusive.

78. **The MS of Claim 77, *wherein*** at least, one ion-conducting MS-block comprises, at least, one electrode-connected assembly of two IB channels, selected among series comprising its types and including, at least, two types selected among the group as follows: with a four-vertex *PLR*-sub-system, with a three-vertex *PLR*-sub-system, with a double-vertex *PLR*-sub-system, with a single-syllable reflecting IO sub-system $\Gamma_D(1,f)j_{\Gamma D}$.

79. **The MS of any Claims 75-78, *wherein*** its block-structured docking group comprises a pre-shaping block, which comprises, at least, one pre-shaping IB channel, performed with option of interim pre-shaping, to accelerate and guide the ions flux, wherein the said pre-shaping IB channel comprises, at least, one unit set, selected among series comprising: an ion pre-trap; a drift tube of asymmetrical cell of ion mobility DC/field (cells of ion mobility) with entry and exit gates (ports) with ions gate valves; refracting elements and a diaphragm-aperture.

80. **The MS of any Claims 75-79, *wherein*** its ionic source block comprises, at least, one ionic source IB channel, performed with option to be used in one of modes, selected among series comprising continuous ions flux generation and pulse ions flux generation.

81. **The MS of any Claims 75-80, *wherein*** at least, one ions detector of detecting group is provided with ions separator of certain transmission band and comprises, at least, one of series terms comprising control grids, logical Bradbury-Nielsen terms, a plane-parallel deflector (condenser).

82. **The MS of any Claims 75-81, *wherein*** each its ions detector is mainly connected to a system of data acquisition and data-storage provided with an analog-to-digital converter (adaptive data compression protocol).

83. **The MS of any Claims 75-82, *wherein*** at least one ion detector is configured within an extended dynamic range.

84. **The MS of Claim 83, *wherein*** its ion detector is configured to allow extension of dynamic ranges of the said MS through alternative scanning associated with varied intensity of voltage of at least one pulsating ionic source in the said distributing-accelerating IB-channel.

85. **The MS of any Claims 83 and 84, *wherein*** its ion detector is configured to extend a dynamic range of the said MS through alternative scanning by varying durations of ion injections into an output gate of the said ion source.

86. **The MS of any Claims 83-85, *wherein*** its ion detector is configured to allow an automatic gain control.

87. **The MS of any Claims 75-86, *wherein*** its ion pre-trap is configured to comprises, at least, one IB channel of ions pre-trap selected among series consisting of: a quadrupole IB channel, an ion pre-trap, a static IB channel, e.g., provided that the channel IO sub-system of its IB channel is performed with curved main axis in transverse space dispersing mode; an IB channel, a TOF IB channel inclusive performed in one of its mentioned modes, but not limited to.

88. **The MS of any Claims 75-87,** *wherein* its dispersing analyzer block comprises, at least, one dispersing analyzer IB channel, selected among series comprising: toroidal and cylindrical sectoral electric analyzers; a sectoral magnetic analyzer; an orbitrap analyzer; a Fourier-analyzer ICR; a static analyzer, e.g., wherein a channel IO sub-system of its IB channel is performed with curved main axis of transverse-space dispersing type; an IB channel, a TOF IB channel inclusive performed in one of said modes, but not limited to.

89. **The MS of Claim 88,** *wherein* moreover it comprises, at least, on one side; behind a dispersing analyzer of its IB channel; ahead of it; a detecting group (detecting group in a dispersing analyzer IB channel).

90. **The MS of any Claims 75-89,** *wherein* at least, one of selected dispersing analyzer IB channels and IB channels of ions pre-trapping comprises means of adjusting a path length and a voltage of ion acceleration.

91. **The MS of Claim 90,** *wherein* its analyzing-dispersing IB-channel is configured to allow an ion path length less than a value for said IB-channel of ion trapping, e.g., to setting voltage of ions acceleration larger than in the IB channel of ions trapping.

92. **The MS of Claim 91,** *wherein* its MS-channel is configured to allow an ion time-of-flight through the said IB-channel of ion trapping to be at least three times as large as ion time-of-flight through the said analyzing-dispersing IB-channel to perform a time-of-flight mass-spectrometry, selected from the group consisting of $MS\langle n \rangle$-type and $MS/MS$-type, by means of embedded time method.

93. **The MS of any Claims 75-92,** *wherein* it comprises a system of data transmission and processing which supports a parallel reception of daughter fragments spectra without mixing ions spectra which are initial material.

94. **The MS of any Claims 75-93,** *wherein* it comprises, at least, two parallel MS-channels, one of them is performed with option to perform a mass spectroscopy of the solids, while one other is configured to allow a mass spectroscopy of organic matters.

95. **The MS of any Claims 75-94,** *wherein* it is configured in a block-structured mode integrated, at least, according to one of modularity level versions.

96. **The MS of Claim 95, wherein** its base supporting structures, blocks and peripheral devices are configured in standard structural blocks allowing an authorized access aimed at maintenance operations, functional power up-dating or reconfiguration of the said MS as well as its hardware peripherals.

97. **The MS of any Claims 95 and 96,** *wherein* it is performed with quick-coupled interface nodes, comprised in configuration of the said MS equipment and its hardware peripherals.

98. **The MS of any Claims 95-96,** *wherein* it is performed with option to be mounted, at least, with one peripheral device, selected among series comprising devices of: data input, data conversion, data communications and data reproduction depending on requirements to transferred data as well as to devices of data reproduction.

99. **The MS of Claim 98,** *wherein* its devices of data input, data conversion, data communications and data reproduction are interconnected, at least, by means of one mode, selected among series comprising electrical communications and wireless communications.

Fig. 1

Fig. 2

Fig. 3

Fig. 4

Fig. 5

Fig. 6

W03RG

W34G2    W33G2    W32G
W34G22    W33G22    W31Gn
$\vec{n}$    Fu    W33G12
W33G1    W31G

Fig. 7

W03RQ

$h_{\otimes2}$    W34Q2    W33Q2    W32Q    W31Qn
Fu
$\vec{n}$
$h_{\otimes1}$    W34Q1    W33Qs1    W33Q1    W31Q

Fig. 8

01y

011E
$\vec{n}$
$\gamma_{(12)E}$
012E

Fig. 9

02y

021E
R
$\vec{n}$
022E

Fig. 10

110y

114    113    112    111
$\vec{n}$

Fig. 11

140y

143    142
$\vec{n}$
144    141

Fig. 12

150Ry

y
153    152    151
$\vec{n}$
154    151n

y
z

Fig. 13

160Ry

164s1  163  162

164

$\vec{n}$

164s2  161n  161

y

z

Fig. 14

170Ry

174  172  171

$\vec{n}$

173  171n

y

z

Fig. 15

V110R

V114  V112  V111n

V111

V113

x  z  y

Fig. 16

W110R

W114.2  W113.2  W111

W114.22

Fu

W114.12  W112  W111n

W113  W113.1  W114.1

x  z  y

Fig. 17

W170R

W174.2  W173.2  W171

Fu

$\vec{n}$

W174.1  W173.1  W172  W171n

x  z  y

Fig. 18

K160Ry

K164.1  $\vec{n}$  K164s2  K164.2

K164s1

K163.1  K163.2

K162.1  K162.2

y

K161

K161n

z

Fig. 19

K140Ry

K144.1  $\vec{n}$  K144.2

K143.1

K142.1  K142.2

K141n  K141

Fig. 20

K120Ry

$\vec{n}$  K124.2

K124.1

K123.1  K123.2

K122.1  K122.2

K121n  K121

Fig. 21

H310

H313  H312  H311

Fig. 22

310y

311  312  313

5

3  2

311i  1  4

Fig. 23

340y

342

341  343

$\vec{n}$

Fig. 24

380y

382  384  385

381

381i  $\vec{n}$  383

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

Fig. 39

Fig. 40

FIg. 41

Fig. 42

Fig. 43

Fig. 44

Fig. 45

840ℜℏ

350Bℏ1

$\theta_{c1\hbar}^+$  1$i_\hbar$82  1Ξ$_{c\hbar}$82

1Ξ$_{d\hbar}$82

$\theta_{c1\hbar}^+$  1$i_\hbar$82  2Ξ$_{c\hbar}$82

2Ξ$_{d\hbar}$82  350Bℏ2

Fig. 46

840ℜ/2λ̵

501xi

34A21  34A22

Fig. 47

840ℜλ̵

32.2  $L_{f2}$  TL  33.1

$L_{d2}$  $L_{d1}$

$L_{f1}$

32.4  32.3

Fig. 48

840ℜ2λ̵

0823  $q_2$  350Bλ̵2

$i_\lambda$B2

$q_1$

$\vec{\kappa}_{n\lambda}'$B2  350Bλ̵1  $\vec{\kappa}_{1\lambda}'$B2

Fig. 49

846ℜℏ

1$i_\hbar$C1  350Cℏ2

[1]  1$\vec{\kappa}_\hbar'$C1  1$\vec{\kappa}_\hbar$C1

0824ℏ

2$i_{1\hbar}$C1  2$\vec{\kappa}_{1\hbar}$C1

[2]  2$i_{2\hbar}$C1

2$\vec{\kappa}_{2\hbar}'$C1

350Cℏ.  Fig. 51

840ℜ1λ̵

Ξ$_{c\lambda}$82  350Bλ̵2

$\vec{\kappa}_{n\lambda}'$82  $i_\lambda$82

$q_1$  Ξ$_{c\lambda}$82

350Bλ̵1  0823  $\vec{\kappa}_{1\lambda}'$82

Fig. 50

Fig. 52

Fig. 53

Fig. 54

Fig. 55

Fig. 56

Fig. 57

## INTERNATIONAL SEARCH REPORT

| International application No. |
| --- |
| PCT/KZ 2013/000004 |

**A. CLASSIFICATION OF SUBJECT MATTER**

H01J 49/40 (2006.01); G01N 30/72 (2006.01)

According to International Patent Classification (IPC) or to both national classification and IPC

**B. FIELDS SEARCHED**

Minimum documentation searched (classification system followed by classification symbols)

H01J 49/40, 49/26, 49/40, G01N 30/72, B01D 59/44

Documentation searched other than minimum documentation to the extent that such documents are included in the fields searched

Electronic data base consulted during the international search (name of data base and, where practicable, search terms used)

PatSearch (RUPTO internal), Esp@cenet, PAJ, USPTO, Information Retrieval System of FIPS

**C. DOCUMENTS CONSIDERED TO BE RELEVANT**

| Category* | Citation of document, with indication, where appropriate, of the relevant passages | Relevant to claim No. |
| --- | --- | --- |
| A | WO 2012/005561 A2 (SAPARGALIEV ALDAN ASANOVICH) 12.01.2012, the abstract, the claims | 1-99 |
| A | US 2009166528 A1 (MAKAROV ALEXANDER A ) 02.07.2009, p. 8-14, fig. 1-7 | 1-99 |
| A | WO 2010008386 A1 (LECO CORP et al.) 21.01.2010, the abstract, p. 3-4, fig. 4-10 | 1-99 |
| A | US 2008272287 A1 (VIRGIN INSTRUMENTS CORPORATION) 06.11.2008, the abstract, p. 2-8, fig. 1-4 | 1-99 |
| A | SU 1725289 A1 (INSTITUT YADERNOI FIZIKI AN KAZSSR) 07.04.1992, the abstract | 1-99 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 October 2013 (14.10.2013) | 14 November 2013 (14.11.2013) |

| Name and mailing address of the ISA/ RU | Authorized officer |
| --- | --- |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7381947 B
- WO 2012005561 A
- RU 2367053
- RU 95102394 A1
- US 20080272287 A1, Marvin L.
- US 6903332 B2, Gerhard W.
- US 6621073 B1

- US 6570152 B1, Johan B.H.
- US 6717132 B2, Jochen Franzen
- SU 1725289 A1
- US 7385187 B2
- US 7982184 B2
- US 2010008386 A1
- US 7351958 B2

**Non-patent literature cited in the description**

- **TAKAYA S. ; HISAYUKI T. ; MITSUYASU I. ; YOSHIHIRO K.** *Am. Soc. M. S.,* 2005, vol. 16
- **TAKAYA S. ; HISAYUKI T. ; MITSUYASU I. ; YOSHIHIRO K.** *The Am. Soc. M. S.,* 2005, vol. 16

- **DOSKEYEV G.A., SPIVAK ; LAVROV I.F.** *J. Applied Physics,* 1989, vol. 59 (1
- **L.G. GLICMAN et al.** *Nucl. Instr. and Meth. in Phys. Res.,* 1993, vol. 363